# EUROPEAN PATENT APPLICATION

(11) **EP 0 701 907 A1**
(43) Date of publication of application: **20.03.1996**
(21) Application number: 95202290.3
(22) Date of filing: 24.08.1995
(51) Int. Cl.: B41M 5/38, G03C 7/34, C09B 53/02, C09B 55/00

(54) **A dye donor element for use in a thermal dye transfer process**

(30) Priority: 13.09.1994 EP 94202632
(71) Applicant: AGFA-GEVAERT naamloze vennootschap, B-2640 Mortsel (BE)
(72) Inventor: Vanmaele, Luc, c/o Agfa-Gevaert N.V., B-2640 Mortsel (BE)

(57) **Abstract**

The present invention provides a dye donor element for use according to the thermal dye transfer process, said dye donor element comprising on a support a dye layer comprising a binder and at least one heterocyclic dye according to formula (I): 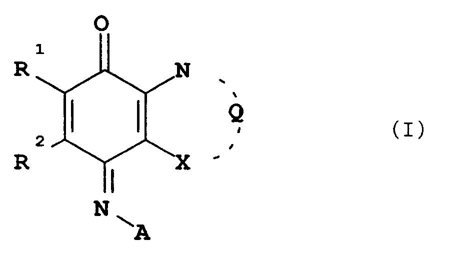
wherein :
Q represents the atoms necessary to form a heterocyclic ring;
A represents an aromatic ring including a hetero-aromatic ring;
X represents O, S or N-G;
G represents hydrogen, an alkyl group, an alkenyl group, an alkynyl group, an aryl group or a heterocyclic ring;
R¹ represents hydrogen, a halogen, an alkyl group, an alkenyl group, an alkynyl group, an alkoxy group, an aryl group, an aryloxy group, a cyan group, an ureido group, an alkoxycarbonylamino group, an alkylthio group, an arylthio group, an alkoxycarbonyl group, a carbamoyl group, a sulfamoyl group, a sulfonyl group, an acyl group, or an amino group;
R² represents hydrogen, a halogen, an alkyl group, an alkenyl group, an alkynyl group, an alkoxy group, an aryl group, an aryloxy group, a cyan group, an acylamino group, a sulfonylamino group, an ureido group, an alkoxycarbonylamino group, an alkylthio group, an arylthio group, an alkoxycarbonyl group, a carbamoyl group, a sulfamoyl group, a sulfonyl group, an acyl group, or an amino group,
or R¹ and R² together with the atoms to which they are attached represent the necessary atoms to form a ring system.

## Description

### 1. Field of the invention.

The present invention relates to novel heterocyclic cyan dyes and to the use of these dyes in dye donor elements used in thermal dye transfer methods, in particular thermal dye diffusion or thermal dye sublimation transfer.

### 2. Background of the invention.

Thermal dye sublimation transfer also called thermal dye diffusion transfer is a recording method in which a dye-donor element provided with a dye layer containing sublimable dyes having heat transferability is brought into contact with a receiver sheet and selectively, in accordance with a pattern information signal, is heated by means of a thermal printing head provided with a plurality of juxtaposed heat-generating resistors, so that dye is transferred from the selectively heated regions of the dye-donor element to the receiver sheet and forms a pattern thereon, the shape and density of which is in accordance with the pattern and intensity of heat applied to the dye-donor element.

A dye-donor element for use according to thermal dye sublimation transfer usually comprises a very thin support e.g. a polyester support, one side of which has been covered with a dye layer comprising the printing dyes. Usually, an adhesive or subbing layer is provided between the support and the dye layer. Normally, the opposite side of the support is covered with a slipping layer that provides a lubricated surface against which the thermal printing head can pass without suffering abrasion. An adhesive layer may be provided between the support and the slipping layer.

A dye-image receiving element for use according to thermal dye sublimation transfer usually comprises a support, e.g. paper or a transparant film coated with a dye-image receiving layer, into which the dye can diffuse more readily. An adhesive layer may be provided between the support and the receiving layer. A releasing agent may be contained in the receiving layer or in a separate layer on top of said receiving layer to improve the releasability of the receiving element from the donor element after the dye transfer has been effected.

The dye layer can be a monochromic dye layer or it may comprise sequential repeating areas of differently coloured dyes e.g. dyes having a cyan, magenta, yellow, and optionally black-colour hue. When a dye-donor element containing three or more primary colour dye areas is used, a multicolour image can be obtained by sequentially performing the dye transfer process steps for each colour area.

Black-coloured images can be obtained by thermal dye sublimation transfer printing either by sequentially performing the dye transfer process steps for the three primary colours cyan, magenta, and yellow by means of a dye-donor element comprising sequential repeating areas of cyan, magenta, and yellow coloured dyes or by performing only one transfer step by means of a dye-donor element having a black-coloured dye layer containing a mixture of yellow, magenta, and cyan coloured image dyes. The latter of these two methods is preferred because of i.a. the ease of manufacturing the donor element containing only one dye area, less time-consuming recording with only one transfer step, and avoiding the problem of transfer in register of the respective dyes in the respective dye areas. Mixtures of yellow, magenta, and cyan dyes for forming a black-coloured dye layer of such a black-coloured dye-donor element have been described in e.g. European patent application N^{o} 92202157.1, EP 453,020, US 4,816,435, and JP 01/136,787.

An important application of the recording of monochromic black images by thermal dye sublimation transfer is the recording on transparant film receiver of hard copies of medical diagnostic images formed by e.g. ultrasound techniques. Such a hard copy is considered to be an ecologically more acceptable and more convenient substitute for the black-and-white silver hard copy formed by development of conventional photographic silver halide film materials where processing solutions comprising silver salt residues have to be treated carefully before disposal.

In order to obtain an image close to images obtained with conventional photographic silver halide materials the black-coloured mixture of organic dyes used in thermal dye sublimation transfer printing should behave optically as black silver.

In the medical world physicians and radiologists evaluate X-ray photographs or other images on a light box or negatoscope. These light boxes contain fluorescent lamps as light source. The spectral emission of fluorescent lamps depends on the phosphors used in the fluorescent lamp, said phosphors having peak emissions. As a result, fluorescent lamps do not show a continuous emission spectrum. Furthermore, there is no standardization in the type of fluorescent lamp used in said negatoscopes.

There is not so much a problem when viewing classical medical images composed of silver metal on the light boxes, since the spectral absorption characteristics of silver are constant over the whole visible spectrum. The hue of the silver image does not change whatever the spectral properties of the light source are, by which the image is being viewed.

However, when the black image is composed of coloured dyes, problems of hue changes may arise, because the spectral absorption characteristics of organic dyes are not constant over the whole range of the visible spectrum. A black-coloured dye mixture having a neutral look when viewed with one light source will not have a neutral look when viewed with a spectrally different light source. This phenomenon of hue change of an image when viewed with a different light source is highly unwanted, especially when medical diagnostic images have to be evaluated.

The characteristics of colour dyes that can be used for composing black-coloured dye mixtures have been further described in EP-A 453020.

Many of the dyes proposed so far for use in thermal dye sublimation transfer are not sufficient in performance since they yield inadequate transfer densities at reasonable coating coverages, or because they have inadequate spectral characteristics for substractive colour systems, or because they have a poor light-fastness.

As mentioned before, for forming a black record by thermal dye sublimation transfer the transfer currently has been performed by means of a dye-donor element having a black-coloured layer containing a mixture of yellow, magenta, and cyan coloured dyes.

However, the conventional materials are insufficient in performance in that the density of the transferred black image obtained therefrom is too low, especially when transfer has been performed onto a transparent dye-image receiving element.

To fulfil the above described requirements for black-coloured dye mixtures, it would be an advantage that the colour dyes have a low molecular mass and a high molar extinction coefficient at the absorption maximum combined with high side absorptions. As a consequence, fewer dyes and/or smaller amounts of dyes would be needed to reach higher black density values, which would also result in less overloading of the polymer matrix of the dye donor layer.

Several classes of dyes have been disclosed as being suitable for use in thermal transfer printing and/or for use in a black mixture. A typical class of dyes well-known in the art of thermal dye transfer printing are azomethine dyes and in particular indoaniline dyes as disclosed in e.g. US 5.034.371, GB 2.209.036, US 4.983.493 and US 4.975.409.

### 3. Summary of the invention.

It is therefore an object of the present invention to provide dyes that are thermally transferable and that have a high molar extinction coefficient, preferably in combination with substantial side absorption i.e. the dyes preferably exhibit a broad absorption in the visual part of the spectrum.

It is a further object of the present invention to provide dye donor elements, in particular cyan and black dye donor elements yielding transferred dye images having a high density and good light stability.

Still a further object of the present invention is to provide a method for making high density cyan or black dye images having a good light stability.

Further objects of the present invention will become clear from the description hereinafter.

In accordance with the present invention there is provided a dye donor element for use according to the thermal dye transfer process, said dye donor element comprising on a support a dye layer comprising a binder and at least one heterocyclic dye according to formula (I): 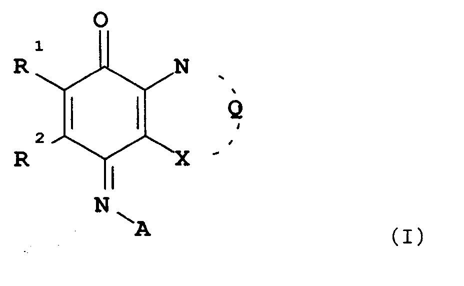
wherein :
Q represents the atoms necessary to form a heterocyclic ring;
A represents an aromatic ring including a hetero-aromatic ring;
X represents O, S or N-G;
G represents hydrogen, an alkyl group, an alkenyl group, an alkynyl group, an aryl group or a heterocyclic ring;
R¹ represents hydrogen, a halogen, an alkyl group, an alkenyl group, an alkynyl group, an alkoxy group, an aryl group, an aryloxy group, a cyan group, an ureido group, an alkoxycarbonylamino group, an alkylthio group, an arylthio group, an alkoxycarbonyl group, a carbamoyl group, a sulfamoyl group, a sulfonyl group, an acyl group, or an amino group;
R² represents hydrogen, a halogen, an alkyl group, an alkenyl group, an alkynyl group, an alkoxy group, an aryl group, an aryloxy group, a cyan group, an acylamino group, a sulfonylamino group, an ureido group, an alkoxycarbonylamino group, an alkylthio group, an arylthio group, an alkoxycarbonyl group, a carbamoyl group, a sulfamoyl group, a sulfonyl group, an acyl group, or an amino group,
or R¹ and R² together with the atoms to which they are attached represent the necessary atoms to form a ring system.

According to the present invention there is further provided a method for making an image comprising the steps of:
- bringing the dye layer of a dye donor element as defined above in face-to-face relationship with a receiving layer of an image receiving element;
- image-wise heating a thus obtained assemblage thereby forming a transfer image on said receiving element and
- separating said dye donor element from said image receiving element.

In accordance with the present invention novel cyano leuco dyes are provided, said cyan leuco dyes corresponding to the following general formula (II) 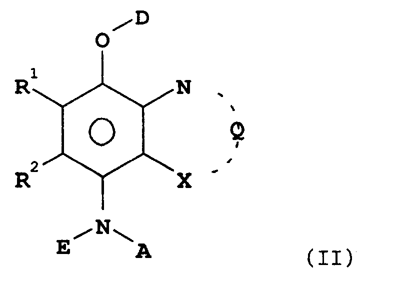
wherein :
R¹, R², A, X and Q have the same meaning as defined above;
E and D each independently represent hydrogen, an alkyl group, an alkenyl group, an alkynyl group, an aryl group, an acyl group, cyano, COOR^{c}, SO₂R^{c}, 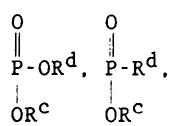
SO₂OR^{c}, COR^{c},
wherein R^{c} and R^{d} each independently represent an alkyl group, an alkenyl group, an alkynyl group, an aryl group or together with the atoms to which they are attached represent the necessary atoms to form a ring.

### 4. Detailed description of the invention

According to a preferred embodiment of the present invention the aromatic group A of general formula (I) corresponds to the following general formula (III) 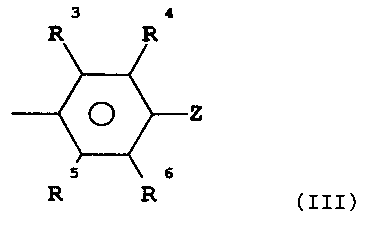
wherein :
Z represents an amino group, an alkoxy group, an alkylthio group or Z and R⁴ and/or Z and R⁶ together with the atoms to which they are attached represent the necessary atoms to form a heterocyclic ring system, and
R³, R⁴, R⁵ and R⁶ each independently represent hydrogen, an alkyl group, an alkenyl group, an alkynyl group, an aryl group, a heterocyclic ring, an alkoxy group, an alkylthio group, an aryloxy group, an amino group, an acylamino group, a nitro, a cyano, a halogen, a sulfonylamino group, an ureido, an alkoxycarbonylamino group, an arylthio group, an alkoxycarbonyl group, a carbamoyl group, a sulfamoyl group, a sulfonyl group or an acyl group.

Most preferred are compounds wherein Z represents NR^{a}R^{b} wherein R^{a} and R^{b} each independently represent alkyl, alkenyl, alkynyl, aryl or wherein R^{a} and R^{b} together with the nitrogen to which they are attached represent the necessary atoms for completing a heterocyclic ring or wherein R^{a} and R⁴ and/or R^{b} and R⁶ together with the atoms to which they are attached represent the necessary atoms for completing a heterocyclic ring.

According to another preferred embodiment of the present invention, X represents O or S.

According to another preferred embodiment of the present invention, the dyes correspond to one of the general formulas IV, V, or VI. 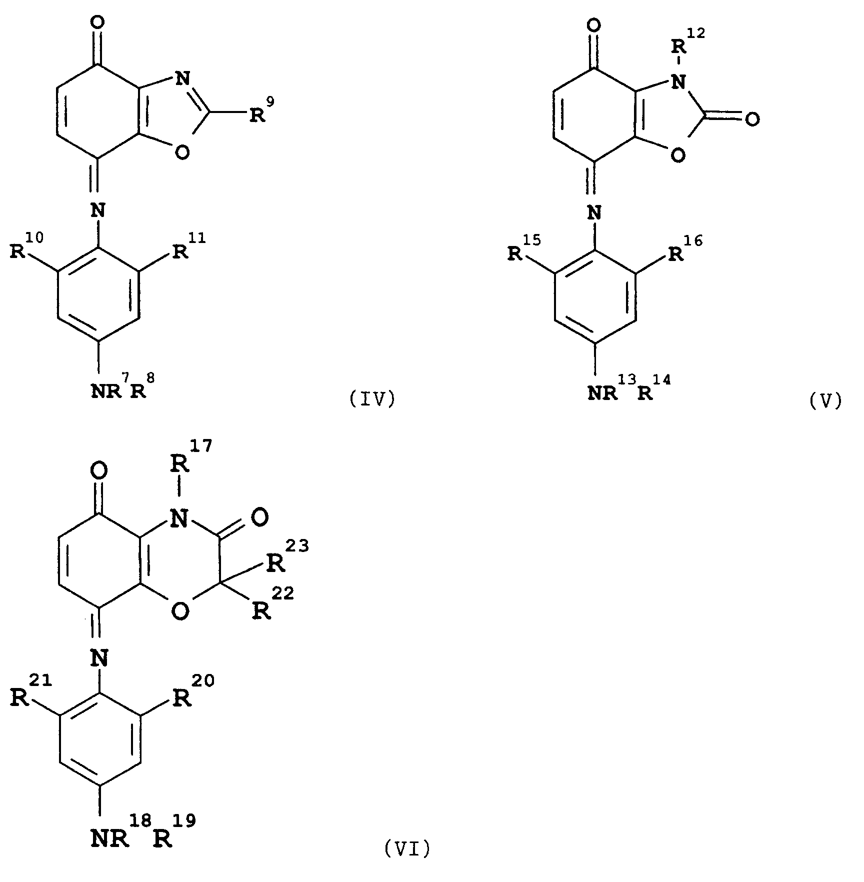
wherein :
R⁹, R¹², R¹⁷, R²² and R²³ independently represent hydrogen, an alkyl group, an alkenyl group, an alkynyl group, an aryl group, OH, SH, anilino, an acylamino group, an sulfonamido group, an alkylthio group, an arylthio group, a heterocyclic group, a sulfonyl group,a sulfinyl group, a phosphonyl group, an acyl group, a carbamoyl group, a sulfamoyl group, cyano, an alkoxy group, a sulfonyloxy group, an aryloxy group, a heterocyclyloxy group, a siloxy group, an acyloxy group, a carbamoyloxy group, an amino group, an imido group, an ureido group, a sulfamoylamino group, an alkoxycarbonylamino group, an aryloxycarbonylamino group, an alkoxycarbonyl group, an aryloxycarbonyl group, a heterocyclylthio group, a thioureido group, a nitro group or a sulfonate group or
R²² and R²³ together with the carbon to which they are attached represent a carbonyl or the necessary atoms for completing a ring;
R⁷ and R⁸ each independently represent hydrogen, an alkyl group, an alkenyl group, an alkynyl group, an aryl group or R⁷ and R⁸ together with the nitrogen to which they are attached represent the necessary atoms to form a ring or R⁷ or R⁸ together with the nitrogen to which R⁷ and R⁸ are attached, the carbon atom to which NR⁷R⁸ is attached and a carbon atom of the phenyl ring in ortho position of NR⁷R⁸ represent the necessary atoms to form an annelated heterocyclic ring;
R¹³, R¹⁴, R¹⁸ and R¹⁹ represent one of the meanings defined for R⁷ and R⁸;
R¹⁰, R¹¹, R¹⁵, R¹⁶, R²⁰ and R²¹ represent one of the meanings defined for R¹ and R².

Examples of dyes according to the present invention are listed in table 1, 2 , 3 and 4.

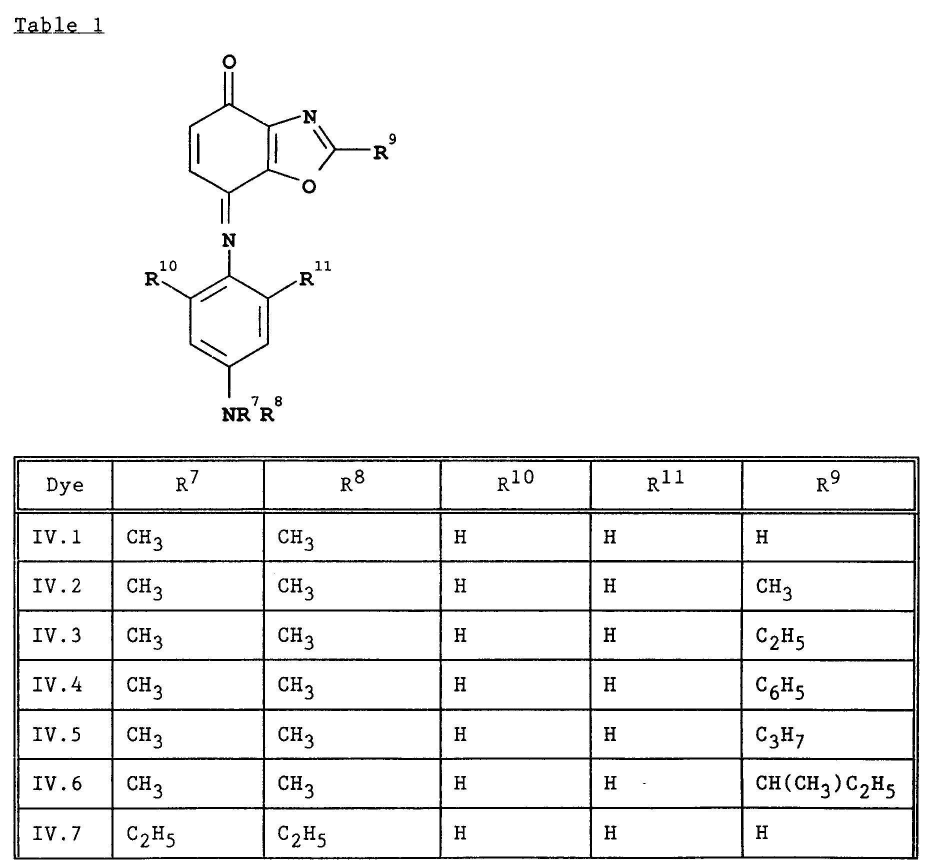

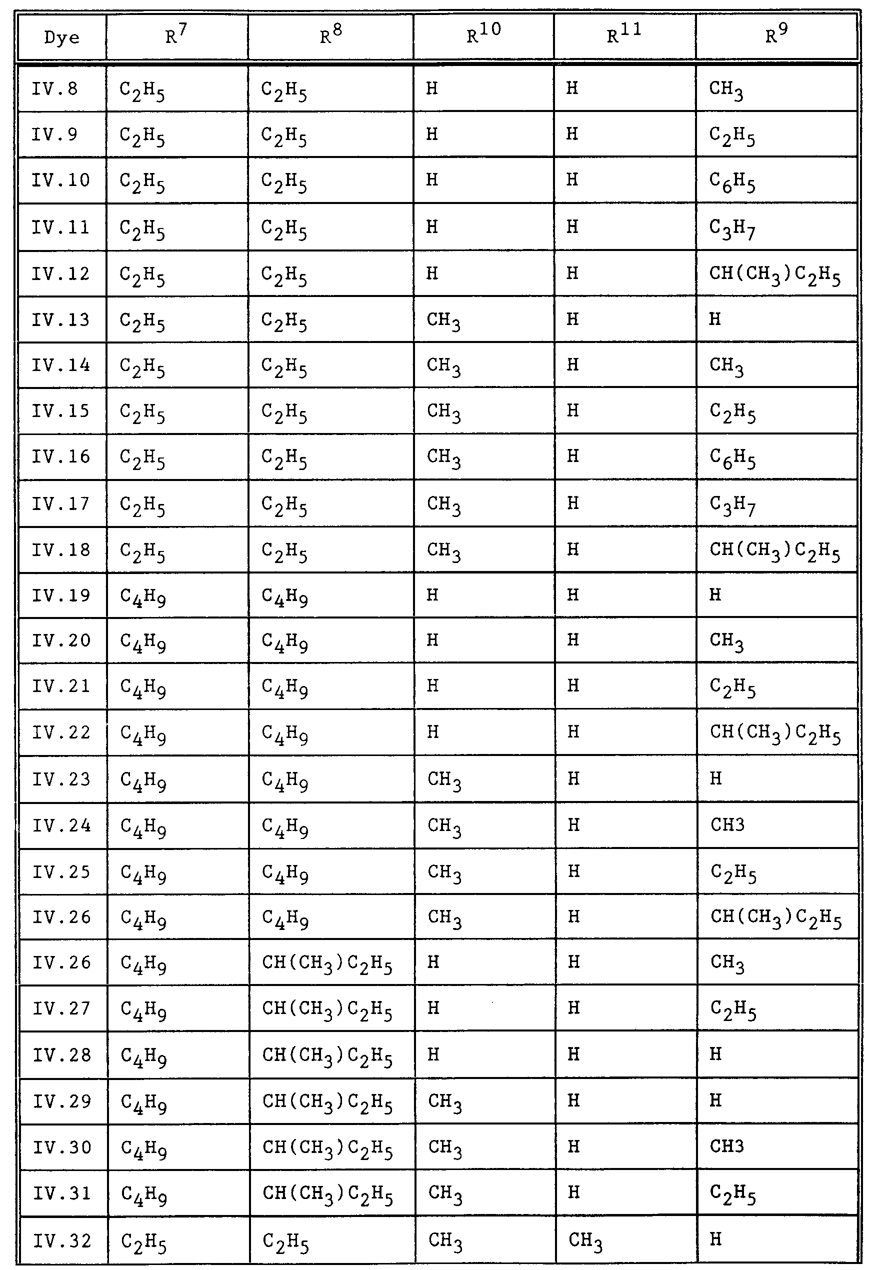

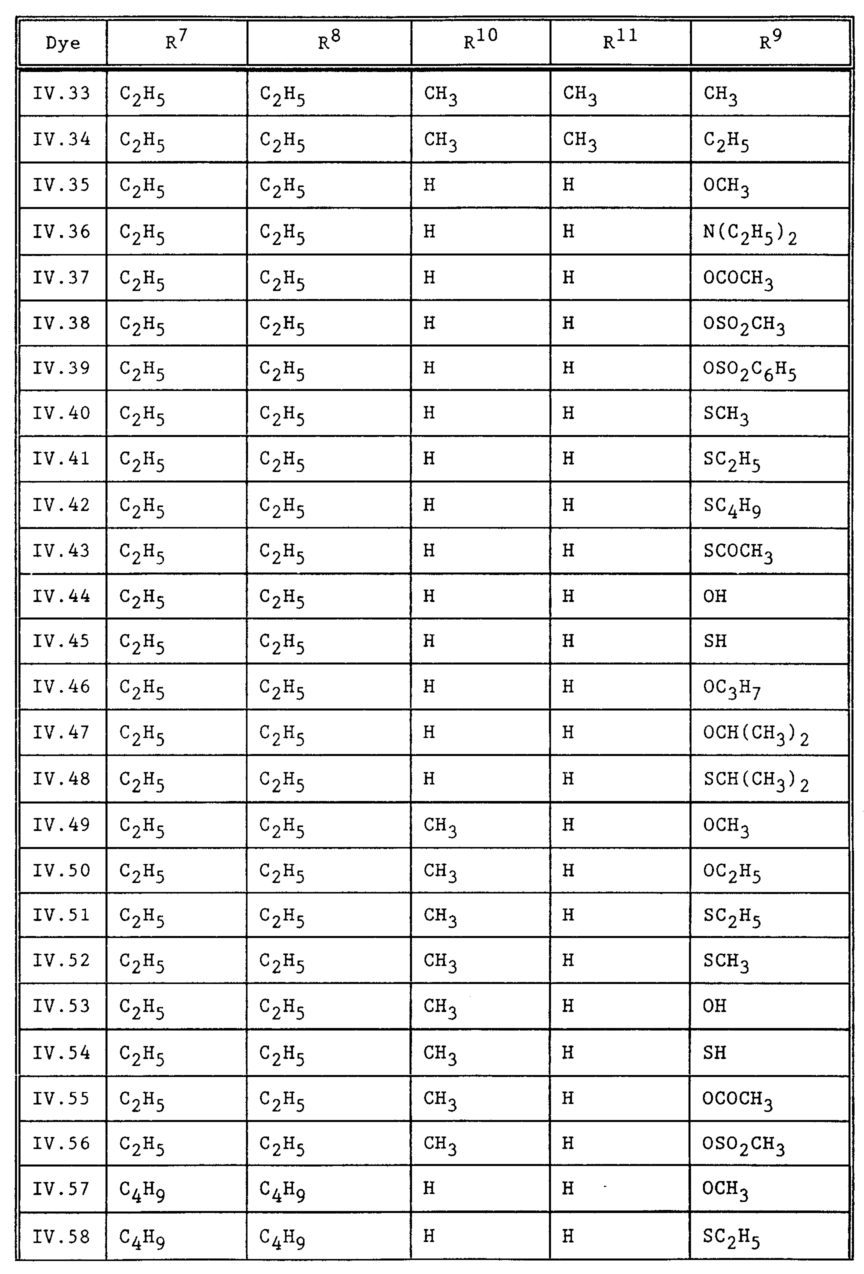

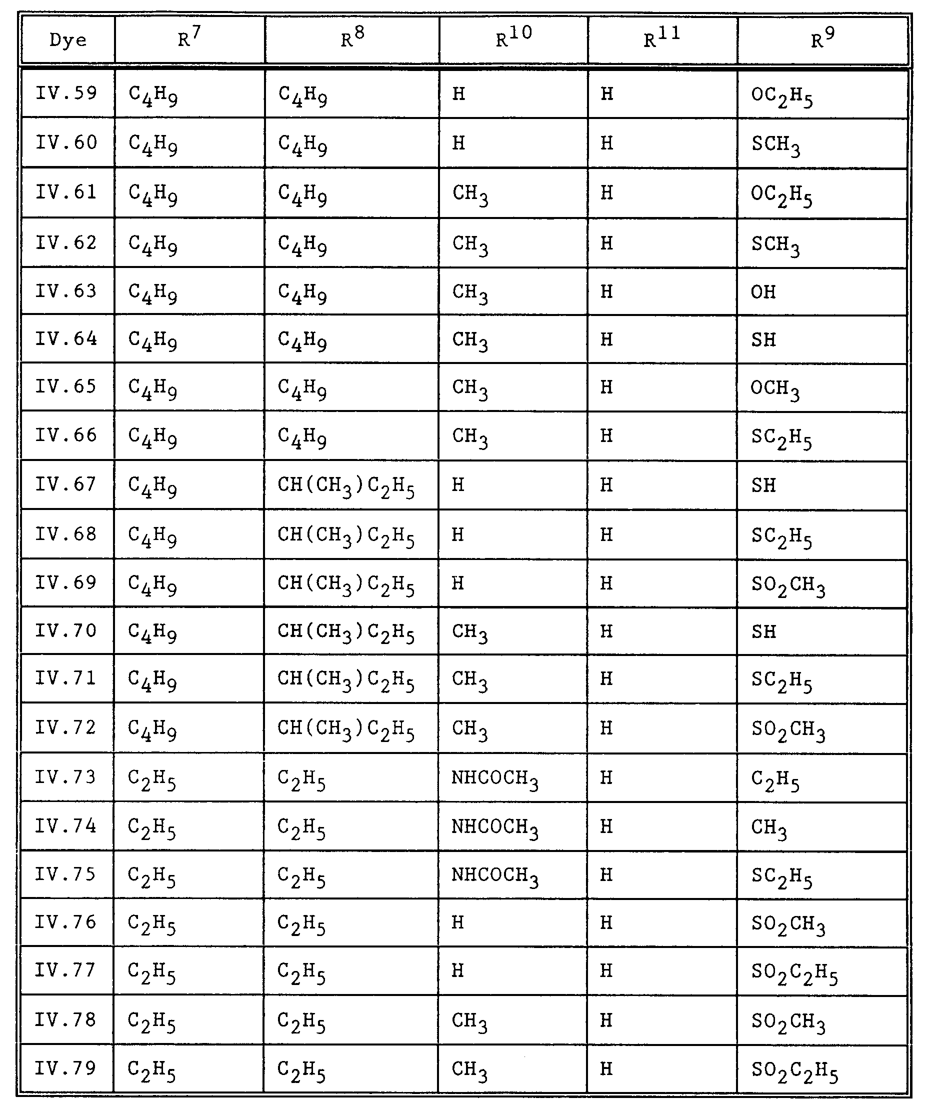

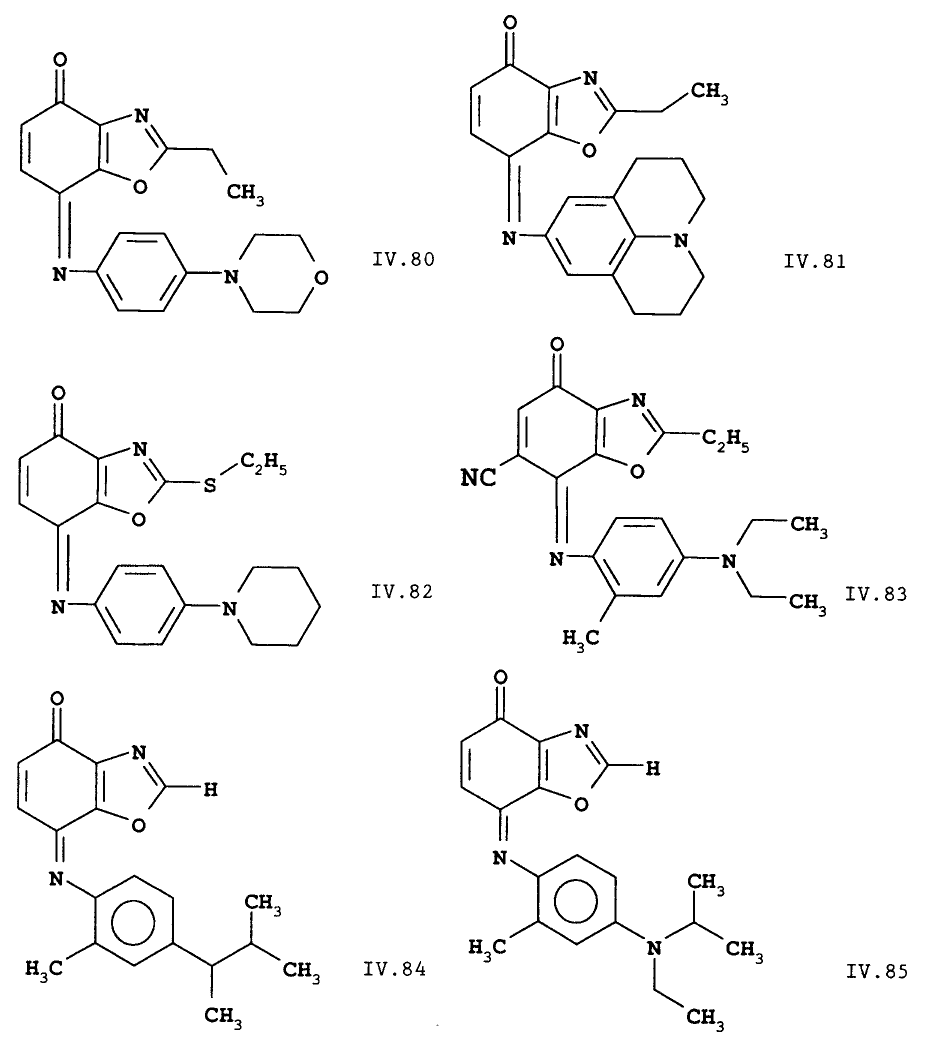

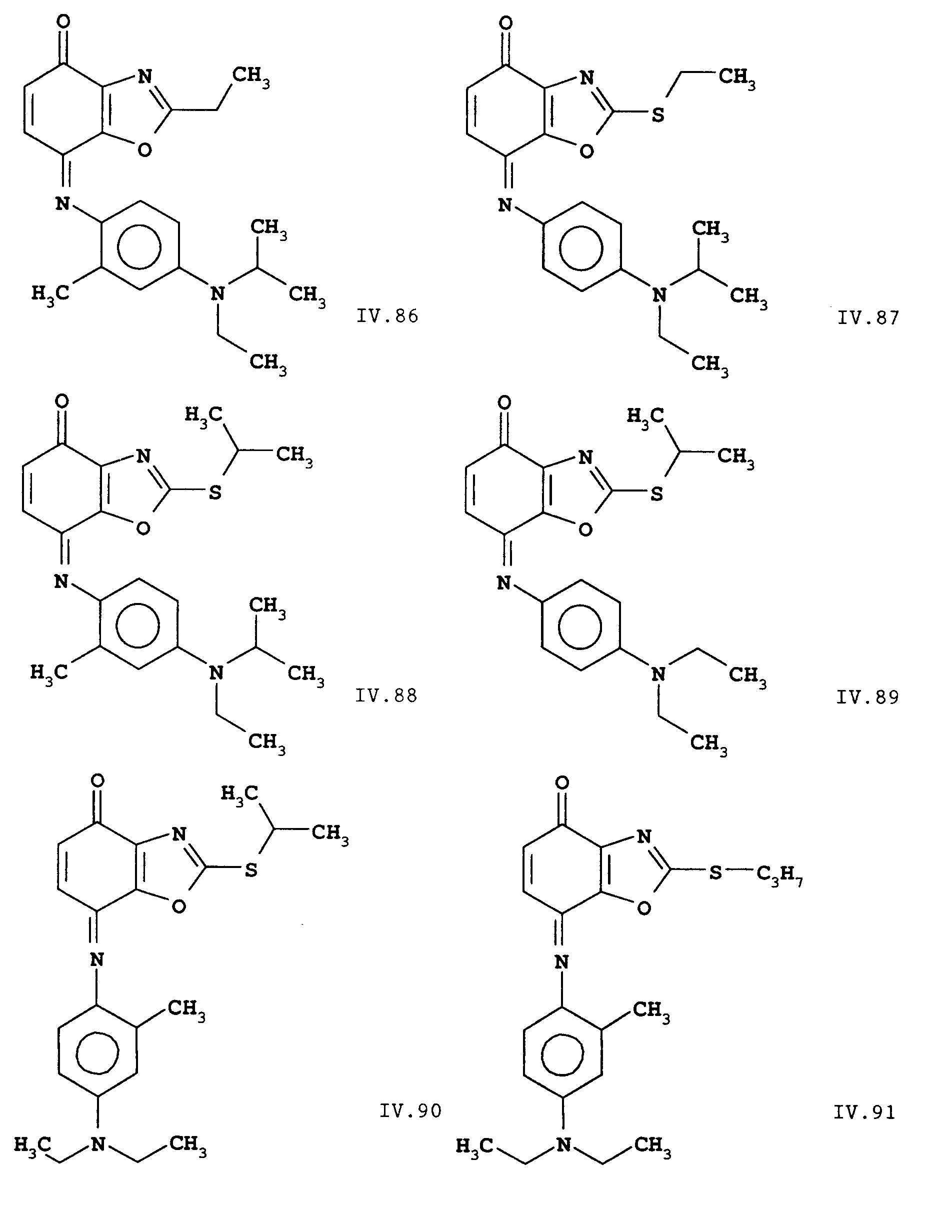

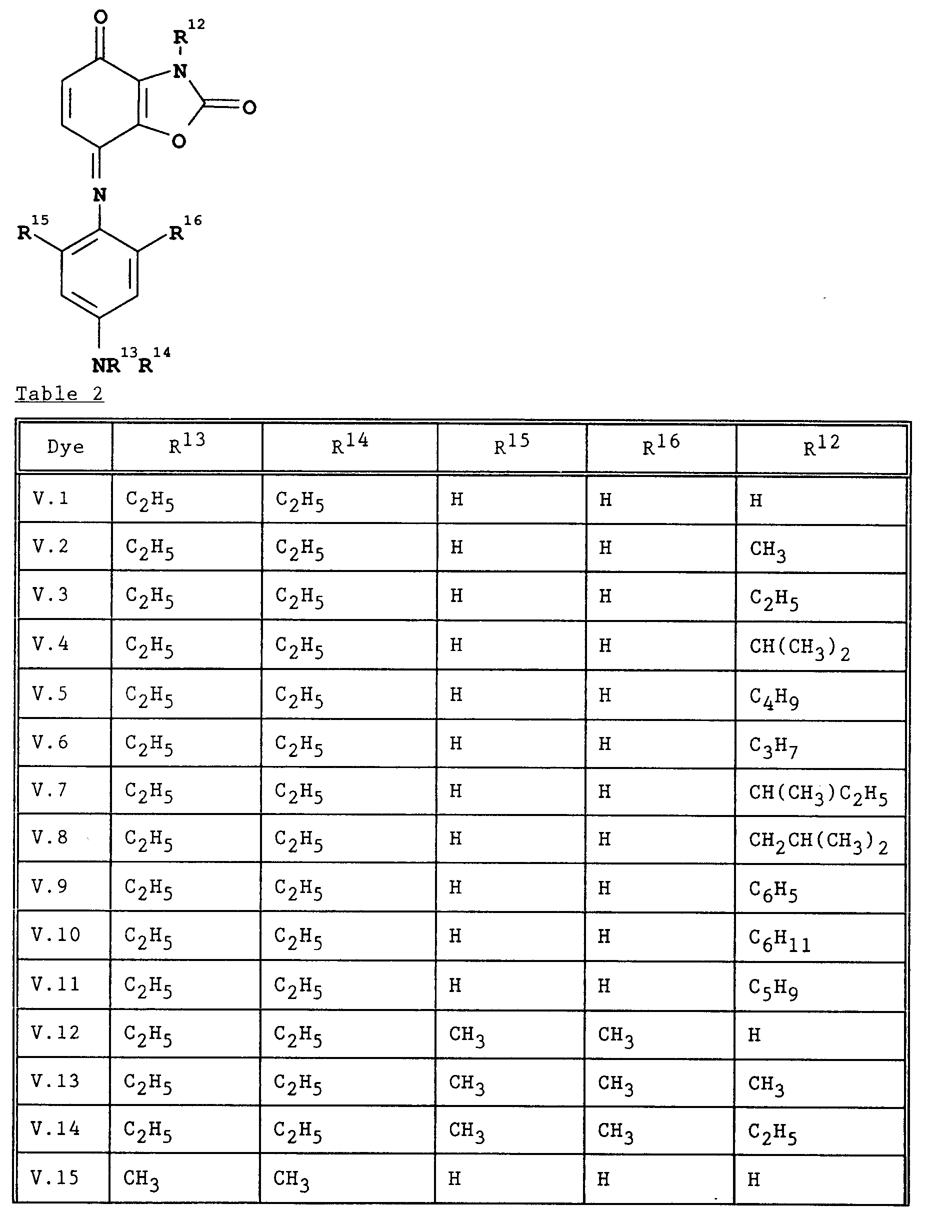

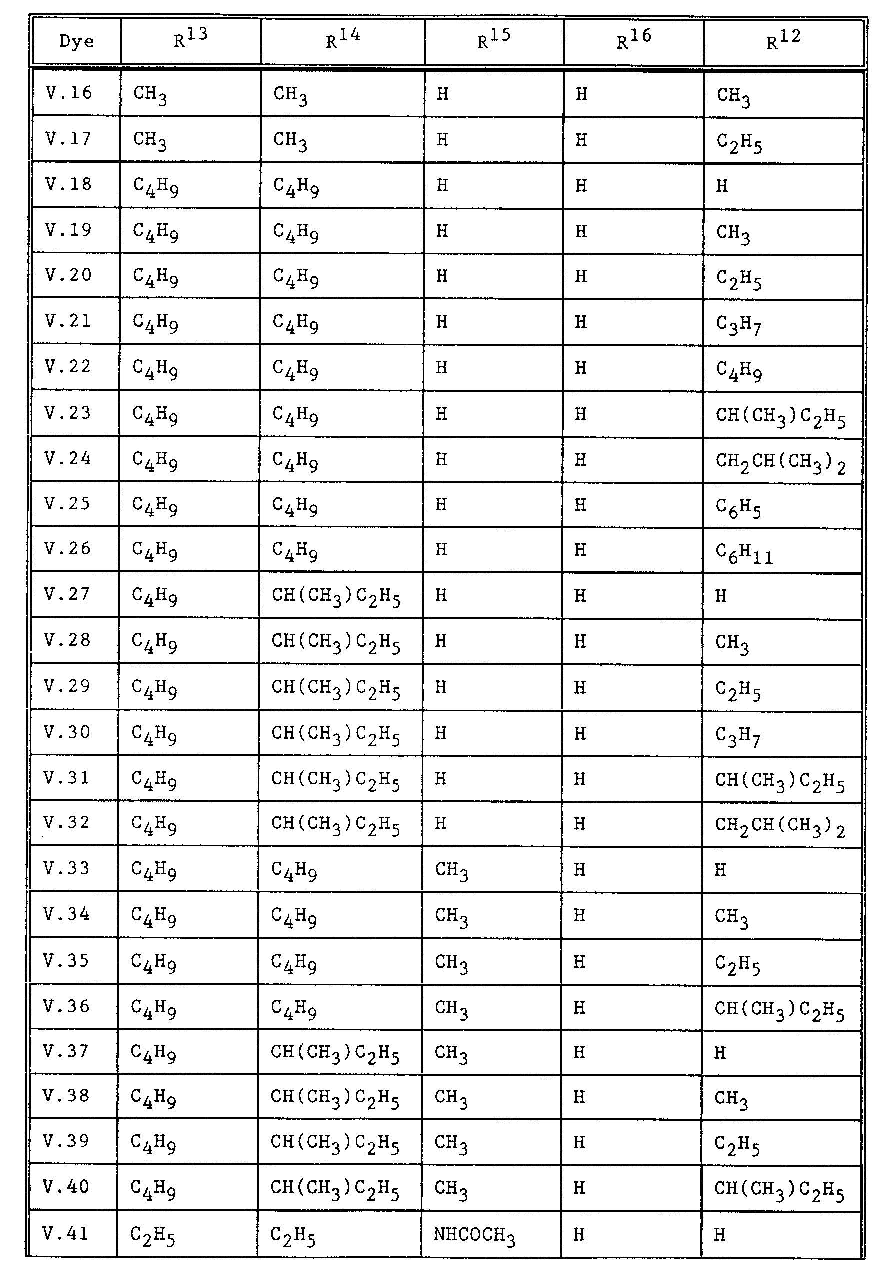

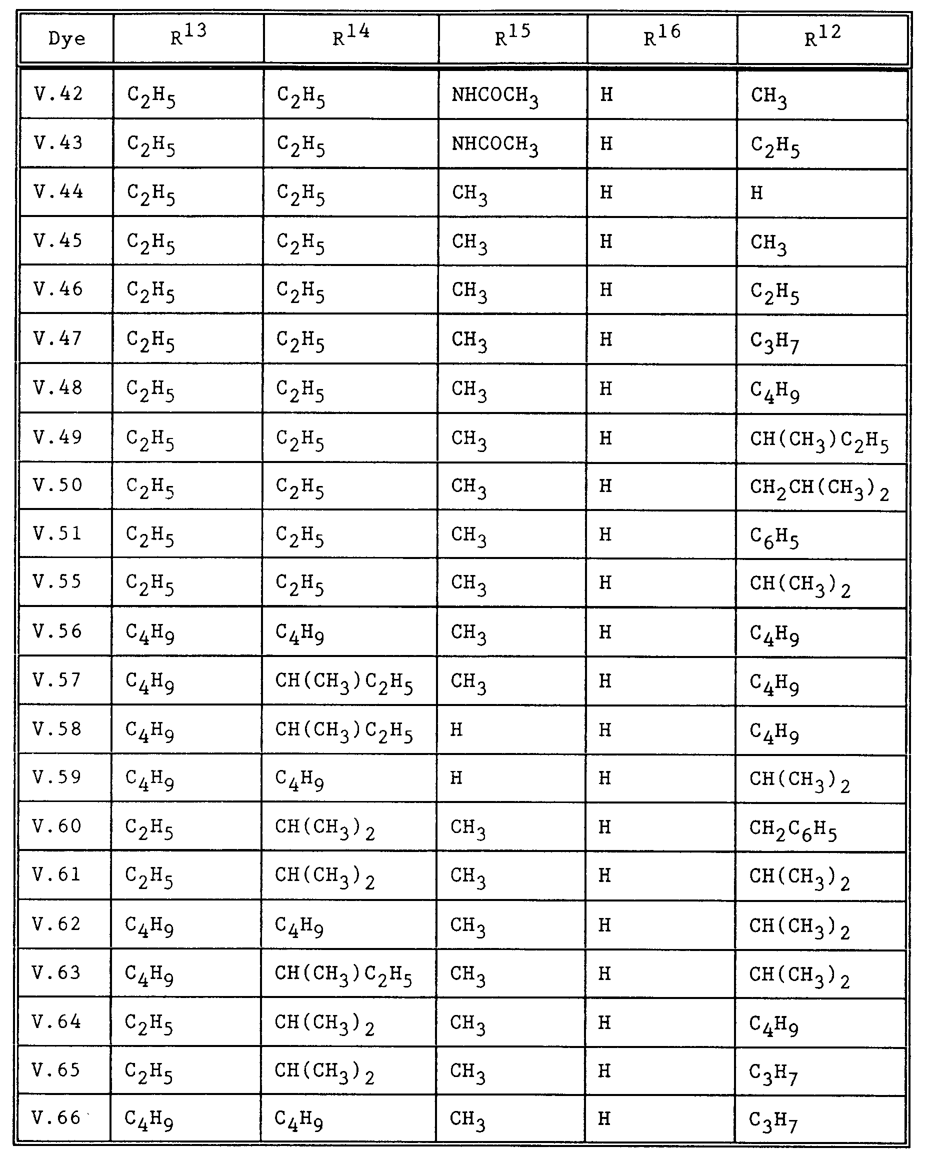

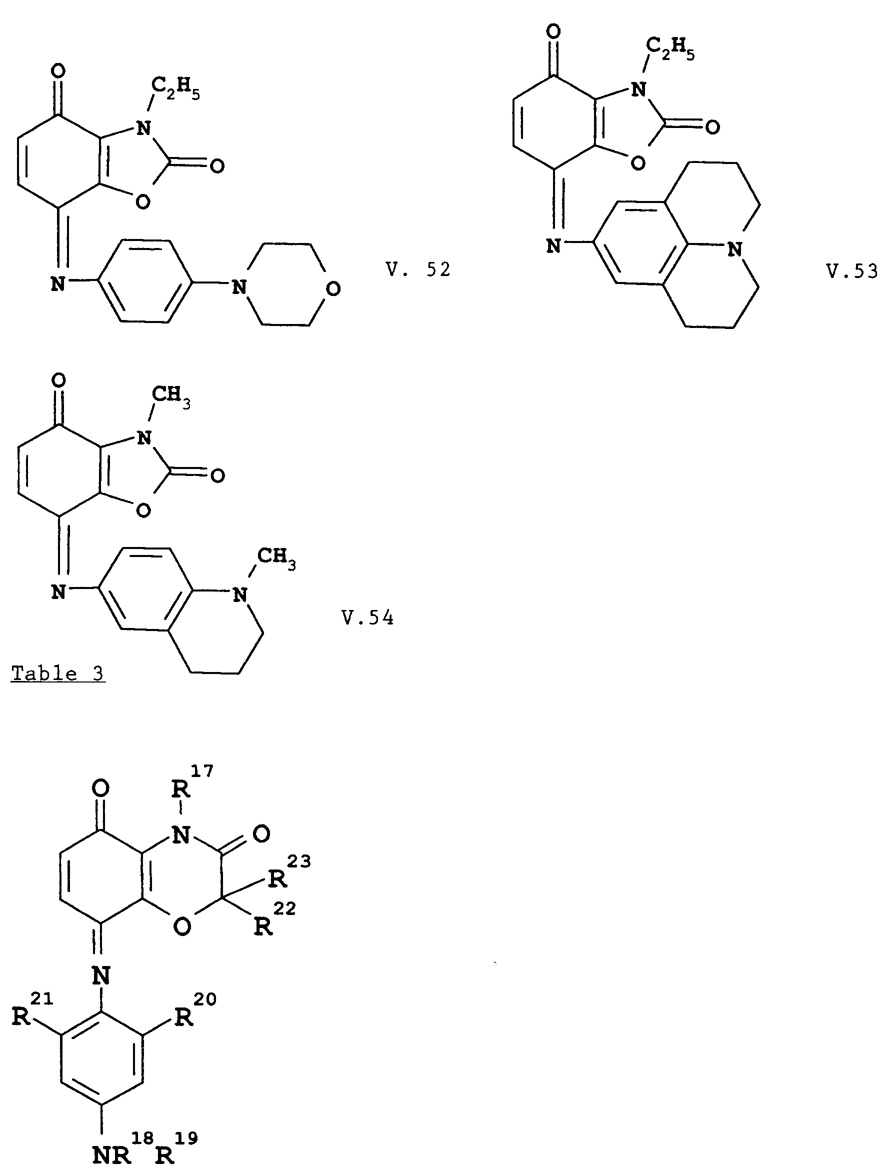

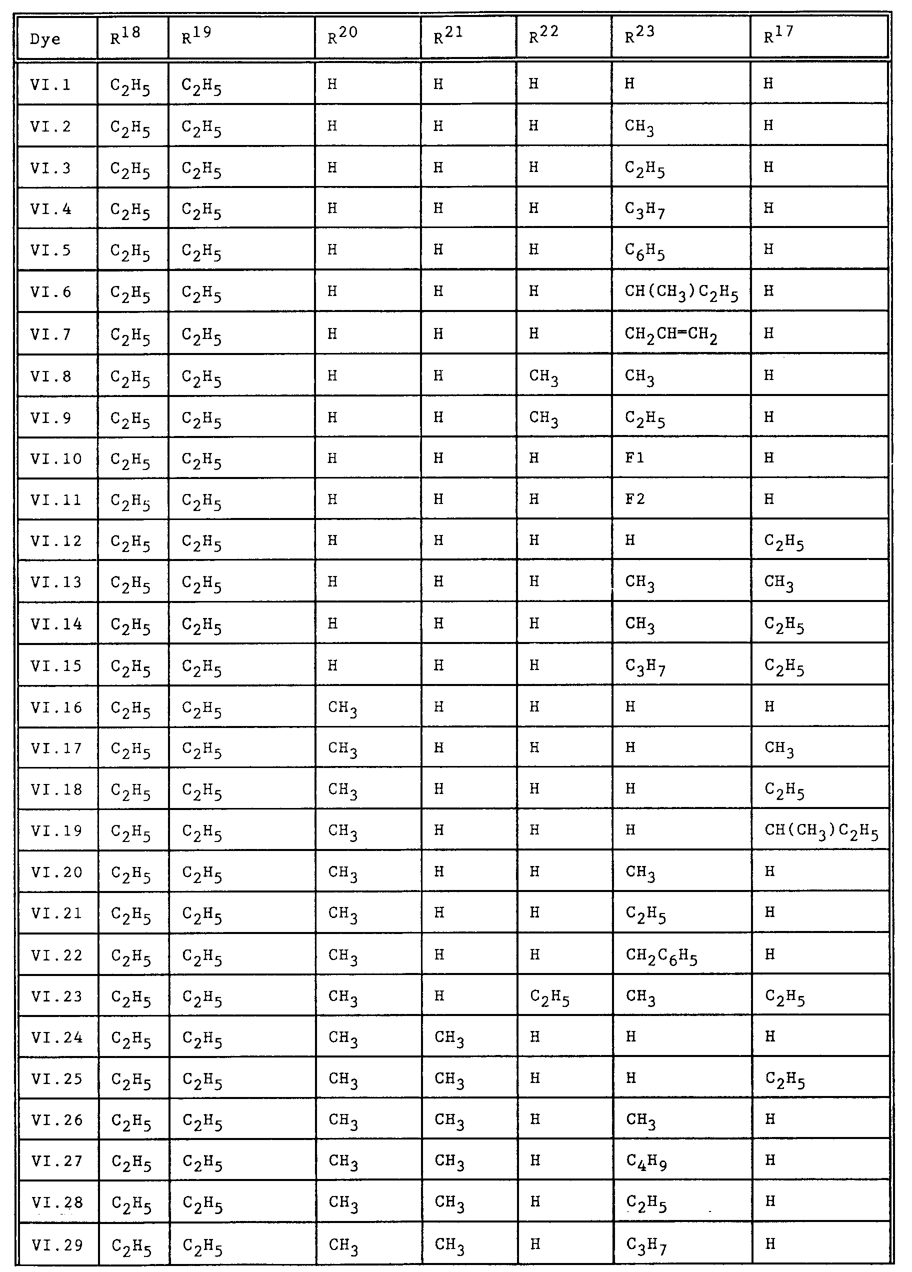

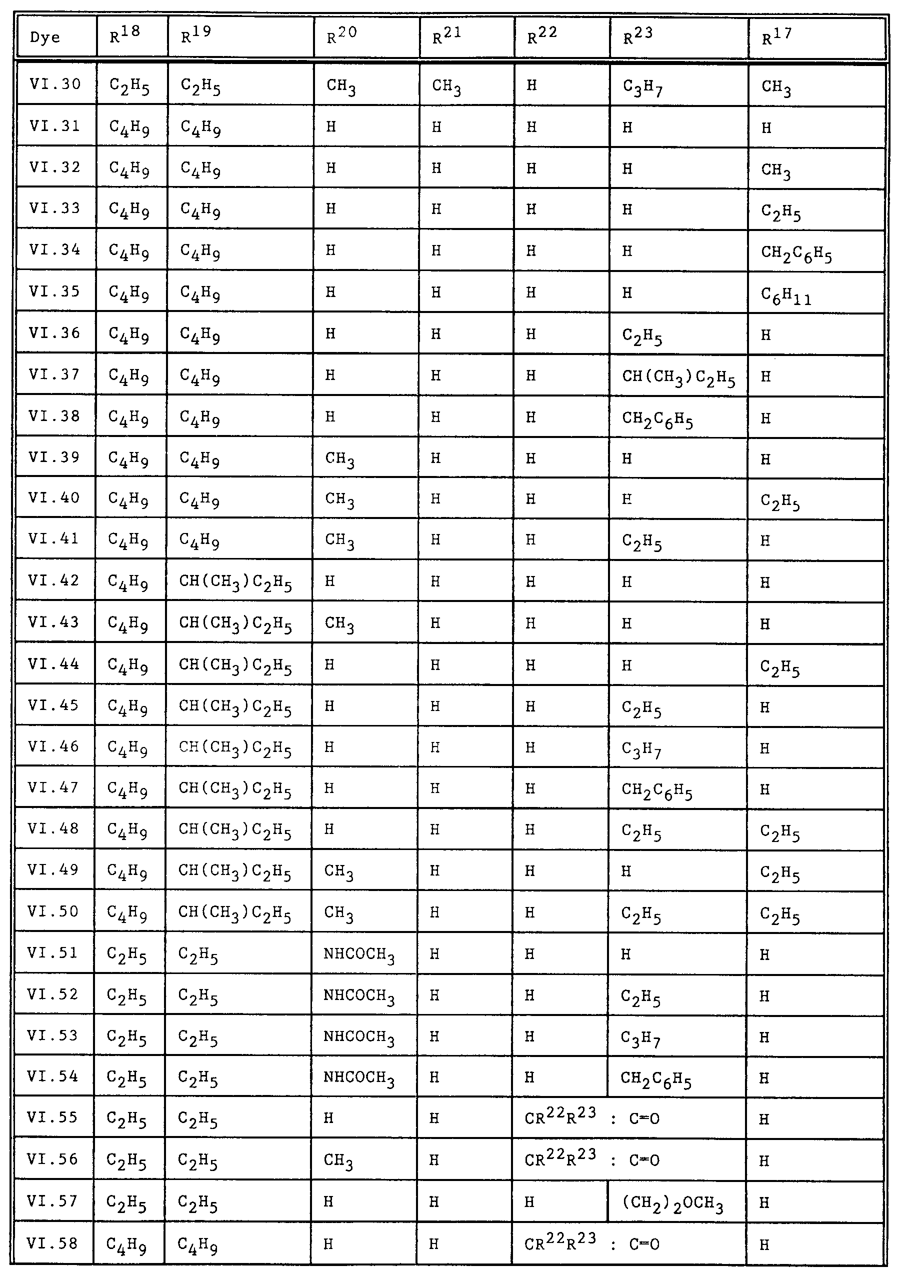

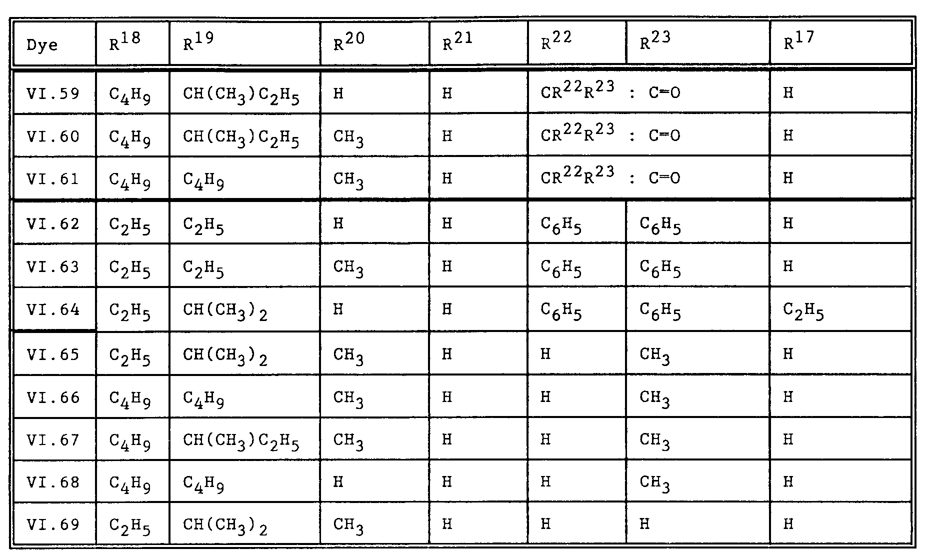

The fragments F1 and F2 correspond to the following formulas wherein "*" denotes the bonding position: 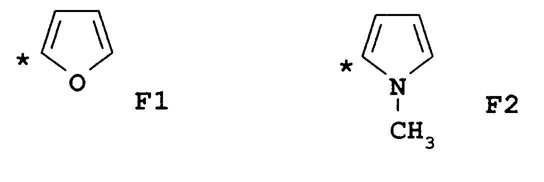
Representatives of novel cyan leuco dyes of general formula (II) correspond to formulas (VIII), (IX) and (X). 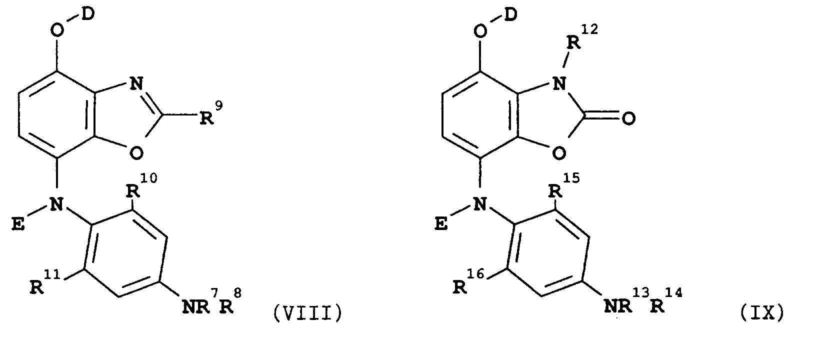 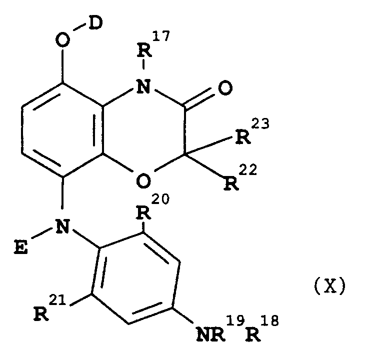
wherein:
R⁷ to R²³, E and D have one of meanings given above.

These cyan leuco dyes are prepared from the corresponding cyan dyes of formula (IV), (V) and (VI), in particular those of tables 1 - 3, by reduction, optionally followed by derivatization. This method is well known to those who are skilled in the art of organic synthesis. Examples of reducing methods are catalytic hydrogenation. Na₂S₂O₄, vitamin C, etc.

The new dyes according to formula (I) can be prepared according to scheme 1, i.e. by oxidative coupling between a phenolic coupler and an aromatic amine, including a hetero-aromatic amine. In order to improve the synthesis of the dye a halogen may be present in the para position of the hydroxy group of the phenolic coupler. 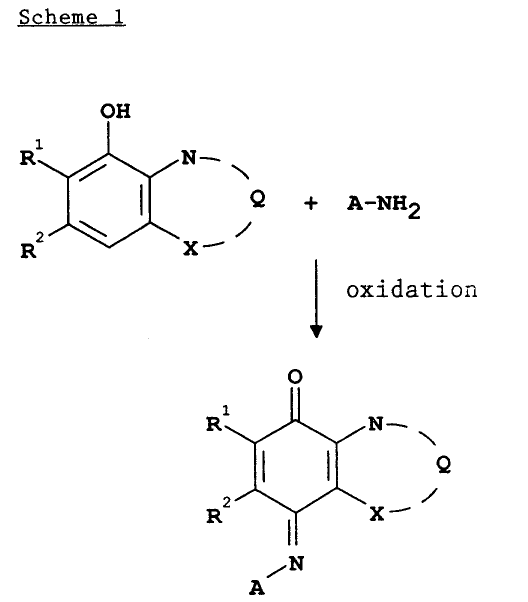
The couplers can be prepared according to methods known to those skilled in the art of organic synthesis, such as presented in Scheme 2. 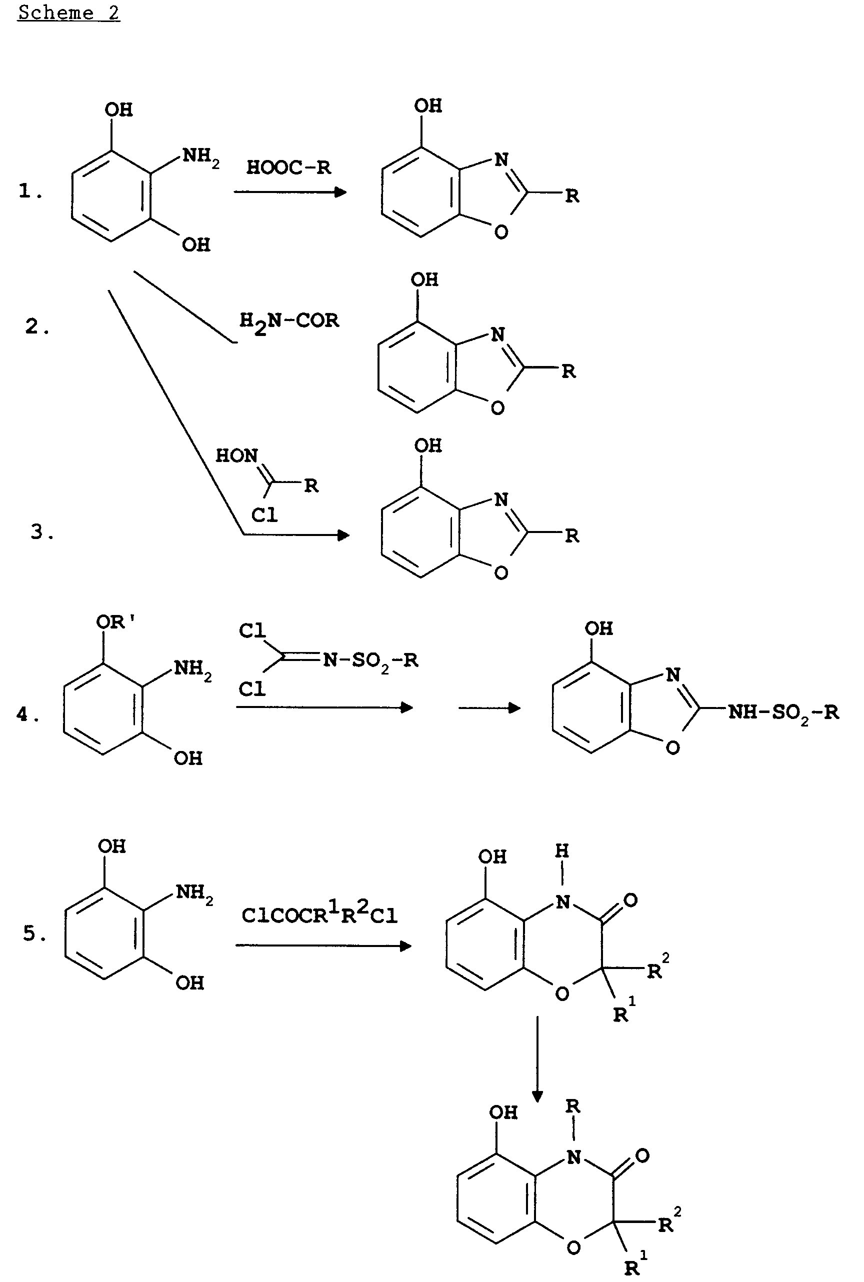 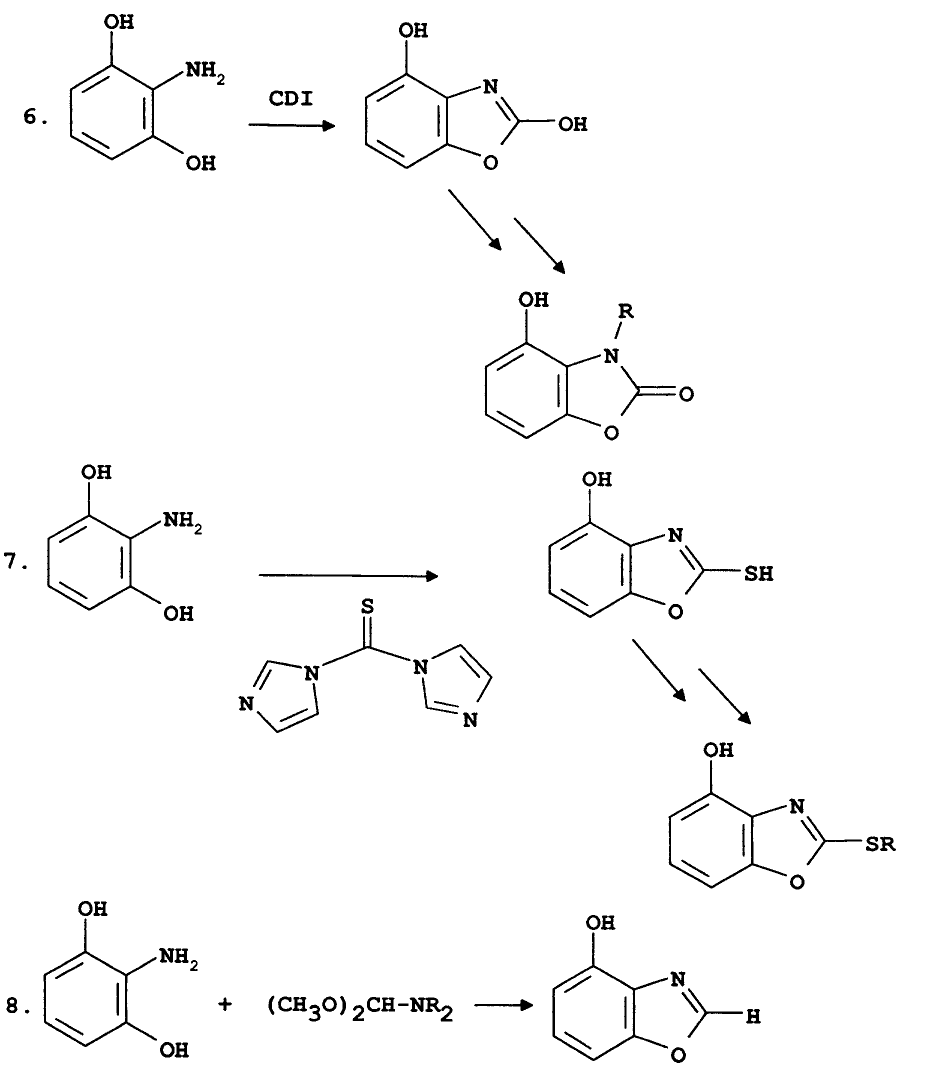
1. Condensation of 2-aminophenoles with carboxylic acids.
2. Condensation of 2-aminophenoles with carboxylic amides.
3. Transformation of 2-aminophenoles into 2-carbamoylphenoles followed by acid catalyzed cyclization.
4. Transformation of 2-aminophenoles with N-dichloromethylenesulfonamide into 2-sulfonylbenzoxazoles.
5. Condensation of 2-aminophenoles with α-chloroacylchlorides, also oxalyl chloride, followed by derivatization.
6. Condensation of 2-aminophenoles with carbonyldiimidazole (CDI), followed by derivatization.
7. Condensation of 2-aminophenoles with thiocarbonyldiimidazole, followed by derivatization.
8. Condensation of 2-aminophenoles with N,N-dimethylformamide dimethyl acetal.

### Preparation of dye IV.15

Dye IV.15 is prepared according to scheme 3.

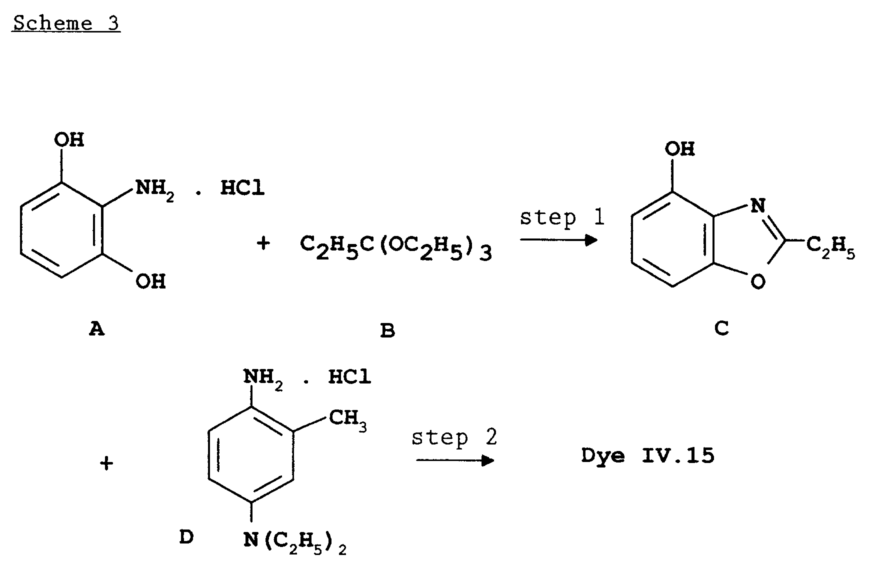

### Step 1

161.5 g of compound A and 387 g of compound B are refluxed for 2 hours. The reaction mixture is poured out into a mixture of 4560 ml of water and 1140 ml of ethanol. The precipitate is stirred for 20 hours. The product is filtered, washed with water and dried at 50^{o}C. 106 g of compound C are obtained.

### Step 2

15.5 g of compound D and 29 g of sodium carbonate are dissolved in 15 ml of methanol and 166 ml of water (solution 1). 34.8 g of iodine and 22.8 g of KI are dissolved in 20 ml of water (solution 2). Solution 1 and solution 2 are added dropwise to a stirred solution of 11.2 g of compound C at room temperature. The reaction mixture is stirred for 30 minutes. The precipitate is filtered, stirred in 250 ml of water and filtered. After being dried dye IV.15 is recrystallized from methanol to obtain 10 g of pure dye IV.15 (m.p. = 126^{o}C).

### Preperation of dye V.46

Dye V.46 is prepared according to scheme 4.

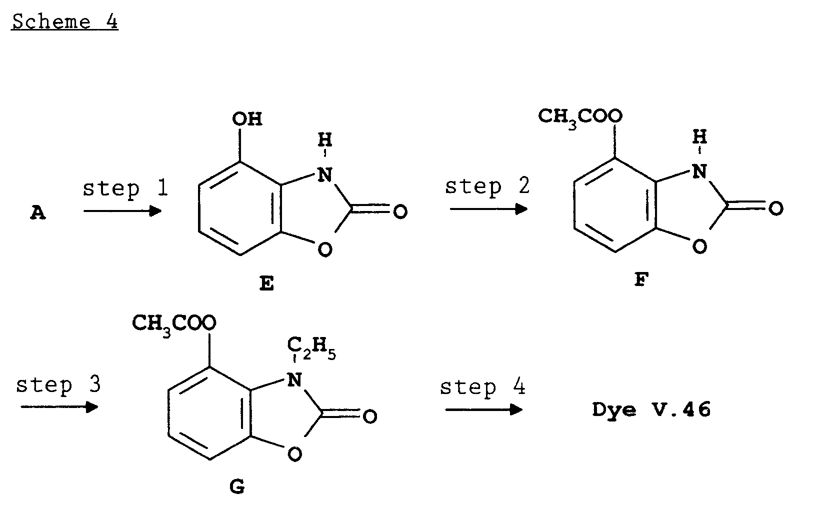

### Step 1

100 g of compound A are added to a suspension of 110.6 g of carbonyldiimidazole in 400 ml of dichloromethane. The reaction proceeds exothermally to reflux. The mixture is stirred for two hours at room temperature. Dichloromethane is removed under reduced pressure and to the residual oil 300 ml of water is added. The precipitate is filtered, washed with water and dried at 75^{o}C. 92 g of compound E are obtained.

### Step 2

30.2 g of compound E and 30.8 ml of triethylamine are dissolved in 100 ml of acetone. 14.6 ml of acetyl chloride are added dropwise at room temperature and stirring is continued for 4 hours. The precipitate is filtered and washed with acetone. The filtrate is concentrated under reduced pressure. The product is further purified by dissolving in a minimal amount of acetone at reflux, followed by crystallization. 31.75 g of compound F are obtained.

### Step 3 and Step 4

0.4 g of sodium hydride are added to a solution of 1.93 g of compound F in 10 ml of dimethylacetamid at 0^{o}C and under a nitrogen atmosphere. After the hydrogen evolution has ceased 0.96 ml of ethyl iodide are added and the solution is heated at 70^{o}C for 4 hours (solution 1), then cooled to room temperature. 2.2 g of 4-N,N-diethylamino-2-methylaniline hydrochloride (compound D) and 4.24 g of sodium carbonate are dissolved in 2.8 ml of methanol and 18 ml of water (solution 2).

3.4 g of potassium iodide and 5 g of iodine are dissolved in 2.8 ml of water (solution 3).

Solution 2 is added to solution 1 followed by dropwise addition of solution 3. After stirring for 30 minutes the precipitate is filtered and washed with water. After drying the product is purified by column chromatography (dichloromethane/ethyl acetate/n-hexane) to obtain 1.1 g of pure dye V.46 (m.p. 179^{o}C).

### Preparation of dye IV.41

Dye IV.41 is prepared according to scheme 5.

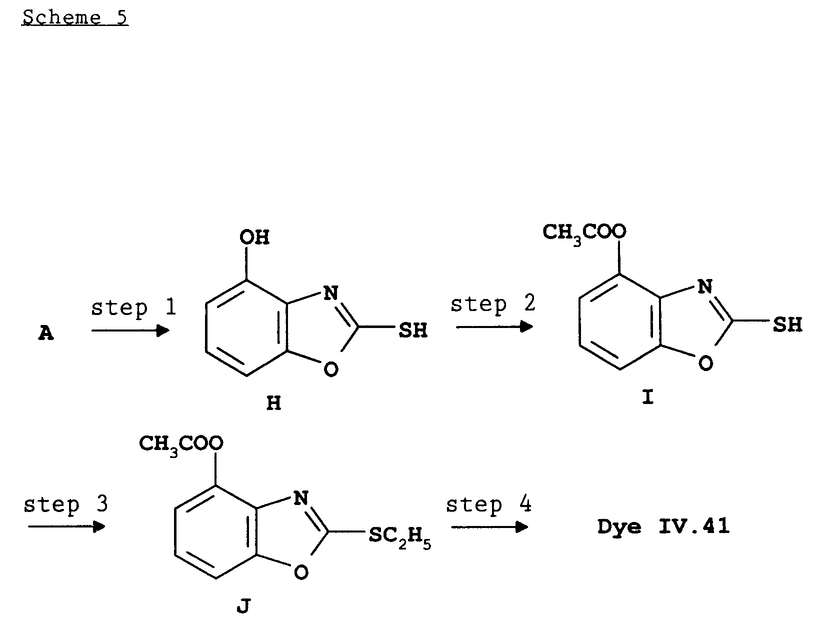

### Step 1

69.2 g of compound A are added portion-wise to a solution of 80 g of thiocarbonyldiimidazole in 300 ml of dichloromethane. The reaction proceeds exothermally to reflux. The mixture is stirred for one hour at room temperature. The solvent is removed under reduced pressure and the residue is dissolved in ethyl acetate. After filtration and concentration the residual oil is stirred in 300 ml of water and 7 ml of concentrated hydrogen chloride. The precipitate is filtered, washed with water and dried to obtain 56 g of compound H.

### Step 2

10 g of compound H and 10.1 ml of triethylamine are dissolved in 30 ml of acetone. 5.2 ml of acetyl chloride are added dropwise at room temperature. The reaction mixture is stirred for two more hours. Acetone is removed under reduced pressure and ethyl acetate is added. The solution is washed with water, dried over sodium sulfate and concentrated under reduced pressure to obtain 11.3 g of compound I.

### Step 3 and Step 4

11.3 g of compound I are dissolved in 50 ml of dimethylacetamid under nitrogen. 2.16 g of sodium hydride are added; after hydrogen evolution has ceased, 4.32 ml of ethyl iodide are added. The reaction mixture is stirred for two hours at room temperature (solution 1). 10.8 g of 4-N,N-diethylaniline and 22.8 g of sodium carbonate are dissolved in 16 ml of methanol and 100 ml of water (solution 2).

18 g of potassium iodide and 27.4 g iodine are dissolved in 16 ml of water (solution 3). Solution 2 is added to solution 1, followed by solution 3. The solution is stirred for two hours at room temperature. The reaction mixture is extracted with ethyl acetate, washed with a diluted hydrogen chloride solution and water. The dried organic phase is concentrated under reduced pressure and the residue is purified by column chromatography to obtain 12.5 g of pure dye IV.41 as an oil.

### Preparation of dye VI.16

Dye VI.16 is prepared according to scheme 6.

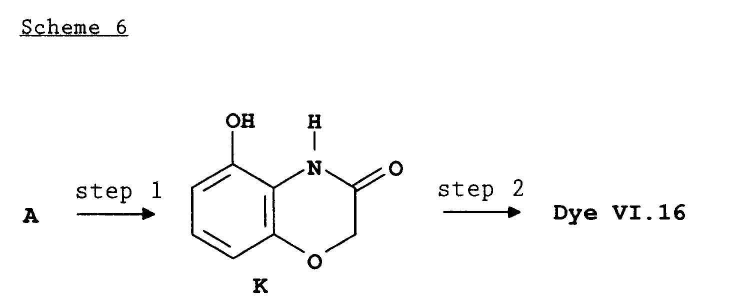

### Step 1

4.85 g of compound A and 5.5 g of sodium bicarbonate are stireed in 10 ml of acetone at room temperature. 2.88 ml of chloroacetyl chloride are added dropwise and the solution is stirred for one hour.

8.34 ml of triethylamine are added and the suspension is stirred at reflux temperature for 6 hours. The reaction mixture is poured into water and stirred for several hours. The precipitate is filtered and dried to obtain 1.5 g of compound K. The filtrate is extracted with ethyl acetate; the organic phase is dried and concentrated under reduced pressure to obtain a further 1.43 g of compound K.

### Step 2

2.8 g of compound K and 7.2 g of sodium carbonate are dissolved in 100 ml of water and 100 ml of ethyl acetate (solution 1).

3.65 g of 2-methyl-4-diethylaminoaniline hydrochloride (compound D) and 7.2 g of sodium carbonate are dissolved in 10 ml of ethyl acetate and 40 ml of water (solution 2).

22.4 g of potassium ferricyanide are dissoled in 80 ml of water (solution 3).

The organic phase of solution 2 is added dropwise, simultaneously with solution 3, to solution 1 at room temperature. The mixture is stirred for one hour and the precipitate is filtered. The product is dissolved in dichloromethane, washed with water, dried and concentrated under reduced pressure. The residue is purified by column chromatography to obtain 0.5 g of pure dye VI.16 (melting point = 203^{o}C, dec.) The structure of dye VI.16 is confirmed by mass spectral analysis and by 1H-NMR analysis (CDCl₃, 20^{o}C, 300 MHz) : 1.22 ppm (CH₃); 3.43 ppm (CH₂-N); 2.38 ppm (CH₃); 6.62, 6.63, 6.50 (phenyl); 4.80 ppm (O-CH₂-C=O); 7.07 ppm (CH=CH); 6.45 ppm (CH=CH); 7.90 ppm (NH).

### Preparation of cyan leuco dyes

### Preparation of the leuco dye of dye IV.21

The leuco dye of dye IV.21 is preparaed according to scheme 7. 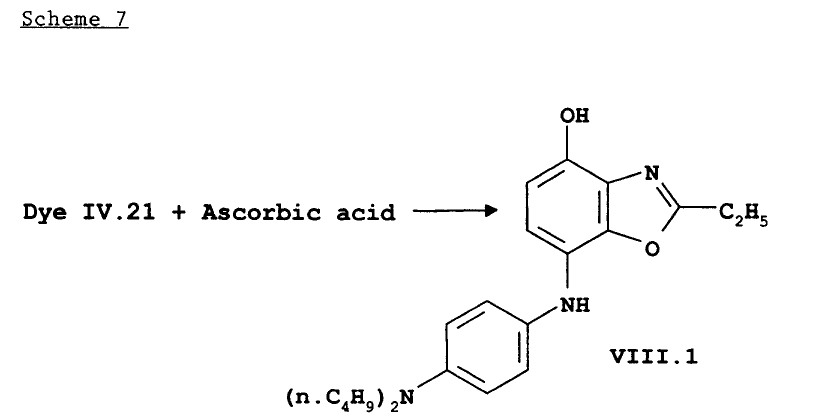
3.96 g of dye IV.21 and 1.83 g of ascorbic acid are dissolved in 10 ml of methanol. The solution is stirred for one hour at room temperature and concentrated under reduced pressure. 55 ml of water and 2 ml of methanol are added and stirring is continued for 15 minutes at 70^{o}C. The precipitate is filtered, washed with water and dried under vacuum. 3.69 g of leuco dye VIII.1 are obtained as a colourless solid (melting point 113^{o}C).

### Preparation of the leuco dyes VIII.2 and VIII.3

The leuco dyes VIII.2 and VIII.3 of dye IV.13 are prepared according to scheme 8. 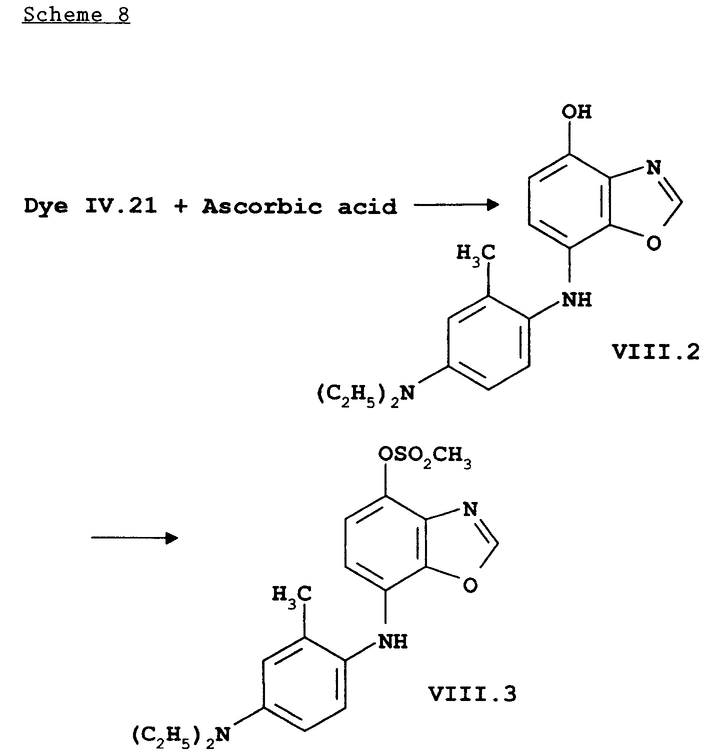
The leuco dye VIII.2 is prepared analogously to the leuco dye VIII.1 (previous example).

1.5 g of compound VIII.2 are dissolved in 10 ml of acetone. 0.87 ml of triethylamine are added, followed by 0.44 ml of methanesulfonyl chloride. The solution is stirred at room temperature for 30 minutes. The solution is poured into a mixture of water and ethyl acetate. The organic phase is washed with water, dried over sodium sulfate and concentrated under reduced pressure to obtain 1.52 g of compound VIII.3 as an oil. The structure is confirmed by 1H-NMR analysis. All other leuco dyes of the dyes mentioned in tables 1 - 4 can be prepared analogously.

The dyes in accordance with the present invention can be used as filter dyes e.g. for silver halide colour photographic materials and also as antihalation dyes. They can be used in inkjet printing, resistive ribbon printing, in inks e.g. for laser applications, in textile, in lacquers, and in paints. They can also be used for transfer printing on fabrics.

According to a preferred embodiment of the present invention the dyes are used in the dye layer of a dye-donor element for thermal dye sublimation transfer.

The dye layer of the dye-donor element is formed preferably by adding the dyes, a polymeric binder medium, and other optional components to a suitable solvent or solvent mixture, dissolving or dispersing by ball-milling these ingredients to form a coating composition that is applied to a support, which may have been provided first with an adhesive or subbing layer, and dried.

The dye layer thus formed has a thickness of about 0.2 to 5.0 µm, preferably 0.4 to 2.0 µm, and the amount ratio of dye to binder ranges from 9:1 to 1:3 by weight, preferably from 2:1 to 1:2 by weight.

The following polymers can be used as polymeric binder : cellulose derivatives, such as ethyl cellulose, hydroxyethyl cellulose, ethylhydroxy cellulose, ethylhydroxyethyl cellulose, hydroxypropyl cellulose, methyl cellulose, cellulose nitrate, cellulose acetate formate, cellulose acetate hydrogen phthalate, cellulose acetate, cellulose acetate propionate, cellulose acetate butyrate, cellulose acetate pentanoate, cellulose acetate benzoate, cellulose triacetate; vinyl-type resins and derivatives, such as polyvinyl alcohol, polyvinyl acetate, polyvinyl butyral, copolyvinyl butyral-vinyl acetal-vinyl alcohol, polyvinyl pyrrolidone, polyvinyl acetoacetal, polyacrylamide; polymers and copolymers derived from acrylates and acrylate derivatives, such as polyacrylic acid, poly-methyl methacrylate and styrene-acrylate copolymers; polyester resins; polycarbonates; poly(styrene-co-acrylonitrile);polysulfones; polyphenylene oxide; organosilicones such as poly-siloxanes; epoxy resins and natural resins, such as gum arabic. Preferably, the binder for the dye layer of the present invention comprises cellulose acetate butyrate or poly(styrene-co-acrylonitrile).

The dye layer of a dye donor element in connection with the present invention may be a continuous dye layer of one or more dyes or the dye layer may consist of a repeating sequence of at least two dye frames. According to a particular embodiment for making colour images the dye donor element can consist of a repeating sequence of a yellow, magenta and cyan dye frame.

The dyes of the present invention can be used alone or mixed with one another, or even mixed with other colour dyes.

The dyes according to formula (I) are particularly useful for making black and white images using the thermal transfer process. Such black and white images may be composed of 3 primary dyes, i.e. yellow, magenta and cyan, that are transferred in sequence to an image receiving element or said black and white images may be obtained by transferring a black mixture of several dyes. In each case at least one of the constituting dyes will be a dye according to formule (I).

Typical and specific examples of other primary colour dyes for use in thermal dye sublimation transfer have been described in e.g. EP 400,706, EP 209,990, EP 216,483, EP 218,397, EP 227,095, EP 227,096, EP 229,374, EP 235,939, EP 247,737, EP 257,577, EP 257,580, EP 258,856, EP 279,330, EP 279,467, EP 285,665, US 4,743,582, US 4,753,922, US 4,753,923, US 5,026,677, US 4,757,046, US 4,769,360, US 4,771,035, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/268,493, JP 86/268,494, JP 85/268,495, and JP 86/284,489.

The coating layer may also contain other additives, such as curing agents, preservatives, organic or inorganic fine particles, dispersing agents, antistatic agents, defoaming agents, viscosity-controlling agents, these and other ingredients having been described more fully in EP 133,011, EP 133,012, EP 111,004, and EP 279,467.

Any material can be used as the support for the dye-donor element provided it is dimensionally stable and capable of withstanding the temperatures involved, up to 400^{o}C over a period of up to 20 msec, and is yet thin enough to transmit heat applied on one side through to the dye on the other side to effect transfer to the receiver sheet within such short periods, typically from 1 to 10 msec. Such materials include polyesters such as polyethylene terephthalate, polyamides, polyacrylates, polycarbonates, cellulose esters, fluorinated polymers, polyethers, polyacetals, polyolefins, polyimides, glassine paper and condenser paper. Preference is given to a support comprising polyethylene terephthalate. In general, the support has a thickness of 2 to 30 µm. The support may also be coated with an adhesive of subbing layer, if desired.

The dye layer of the dye-donor element can be coated on the support or printed thereon by a printing technique such as a gravure process.

A dye-barrier layer comprising a hydrophilic polymer may also be employed between the support and the dye layer of the dye-donor element to enhance the dye transfer densities by preventing wrong-way transfer of dye backwards to the support. The dye barrier layer may contain any hydrophilic material that is useful for the intended purpose. In general, good results have been obtained with gelatin, polyacrylamide, polyisopropyl acrylamide, butyl methacrylate-grafted gelatin, ethyl methacrylate-grafted gelatin, ethyl acrylate-grafted gelatin, cellulose monoacetate, methylcellulose, polyvinyl alcohol, polyethyleneimine, polyacrylic acid, a mixture of polyvinyl alcohol and polyvinyl acetate, a mixture of polyvinyl alcohol and polyacrylic acid, or a mixture of cellulose monoacetate and polyacrylic acid. Suitable dye barrier layers have been described in e.g. EP 227,091 and EP 228,065. Certain hydrophilic polymers e.g. those described in EP 227,091 also have an adequate adhesion to the support and the dye layer, so that the need for a separate adhesive or subbing layer is avoided. These particular hydrophilic polymers used in a single layer in the dye-donor element thus perform a dual function, hence are referred to as dye-barrier/subbing layers.

Preferably the reverse side of the dye-donor element has been coated with a slipping layer to prevent the printing head from sticking to the dye-donor element. Such a slipping layer would comprise a lubricating material such as a surface-active agent, a liquid lubricant, a solid lubricant or mixtures thereof, with or without a polymeric binder. The surface-active agents may be any agents known in the art such as carboxylates, sulfonates, phosphates, aliphatic amine salts, aliphatic quaternary ammonium salts, polyoxyethylene alkyl ethers, polyethylene glycol fatty acid esters. fluoroalkyl C₂-C₂₀ aliphatic acids. Examples of liquid lubricants include silicone oils, synthetic oils, saturated hydrocarbons, and glycols. Examples of solid lubricants include various higher alcohols such as stearyl alcohol, fatty acids and fatty acid exters. Suitable slipping layers have been described in e.g. EP 138,483, EP 227,090, US 4,567,113, US 4,572,860, US 4,717,711. Preferably the slipping layer comprises a styrene-acrylonitrile copolymer or a styrene-acrylonitrile-butadiene copolymer or a mixture thereof or a polycarbonate as described in European patent application no. 91202071.6, as binder and a polysiloxane-polyether copolymer or polytetrafluoroethylene or a mixture thereof as lubicrant in an amount of 0.1 to 10% by weight of the binder or binder mixture.

The support for the receiver sheet that is used with the dye-donor element may be a transparent film of e.g. polyethylene terephthalate, a polyether sulfone, a polyimide, a cellulose ester or a polyvinyl alcohol-co-acetal. The support may also be a reflective one such as a baryta-coated paper, polyethylene-coated paper or white polyester i.e. white-pigmented polyester. Blue-coloured polyethylene terephthalate film can also be used as support.

To avoid poor adsorption of the transferred dye to the support of the receiver sheet this support must be coated with a special layer called dye-image-receiving layer, into which the dye can diffuse more readily. The dye-image-receiving layer may comprise e.g. a polycarbonate, a polyurethane, a polyester, a polyamide, polyvinyl chloride, polystyrene-co-arcylonitrile, polycaprolactone, or mixtures thereof. The dye-image receiving layer may also comprise a heat-cured product of poly(vinyl chloride/co-vinyl acetate/co-vinyl alcohol) and polyisocyanate. Suitable dye-image-receiving layers have been described in e.g. EP 133,011, EP 133,012, EP 144,247, EP 227,094, and EP 228,066.

In order to improve the light-fastness and other stabilities of recorded images UV-absorbers, singlet oxygen quenchers such as HALS-compounds (Hindered Amine Light Stabilizers) and/or antioxidants can be incorporated into the dye-image-receiving layer.

The dye layer of the dye-donor element or the dye-image-receiving layer of the receiver sheet may also contain a releasing agent that aids in separating the dye-donor element from the receiver sheet after transfer. The releasing agents can also be incorporated in a separate layer on at least part of the dye layer and/or of the dye-image-receiving layer. Suitable releasing agents are solid waxes, fluorine- or phosphate-containing surface-active agents and silicone oils. Suitable releasing agents have been described in e.g. EP 133,012, JP 85/19,138, and EP 227,092.

The dye-donor elements according to the invention can be used to form a dye transfer image, which process comprises placing the dye layer of the dye-donor element in face-to-face relation with the dye-image-receiving layer of the receiver sheet and image-wise heating preferably from the back of the dye-donor element. The transfer of the dye is conveniently accomplished by heating for about several milliseconds at a temperature of 400^{o}C.

When the process is performed for but one single colour, a monochromic dye transfer image is obtained. A multicolour image can be obtained by using a dye-donor element containing three or more primary colour dyes and sequentially performing the process steps described above for each colour. The above sandwich of dye-donor element and receiver sheet is formed on three occasions during the time when heat is applied by the thermal printing head. After the first dye has been transferred, the elements are peeled apart. A second dye-donor element (or another area of the dye-donor element with a different dye area) is then brought in register with the dye-receiving element and the process is repeated. The third colour and optionally further colours are obtained in the same manner.

In addition to thermal heads, laser light, infrared flash, or heated pens can be used as the heat source for supplying heat energy. Thermal printing heads that can be used to transfer dye from the dye-donor elements of the present invention to a receiver sheet are commercially available. In case laser light is used, the dye layer or another layer of the dye element has to contain a compound that absorbs the light emitted by the laser and converts it into heat e.g. carbon black.

Alternatively, the support of the dye-donor element may be an electrically resistive ribbon consisting of e.g. a multilayer structure of a carbon-loaded polycarbonate coated with a thin aluminium film. Current is injected into the resistive ribbon by electrically addressing a printing head electrode resulting in highly localized heating of the ribbon beneath the relevant electrode. The fact that in this case the heat is generated directly in the resistive ribbon and that it is thus the ribbon that gets hot leads to an inherent advantage in printing speed using the resistive ribbon/electrode head technology as compared to the thermal head technology, according to which the various elements of the thermal head get hot and must cool down before the head can move to the next printing position.

The following examples illustrate the invention in more detail without, however, limiting the scope thereof. All parts are by weight unless otherwise specified.

### EXAMPLE 1

The absorption maxima (λₘₐₓ) of the dyes identified below were determined in methanol unless otherwise stated. The results are listed in Table 4.

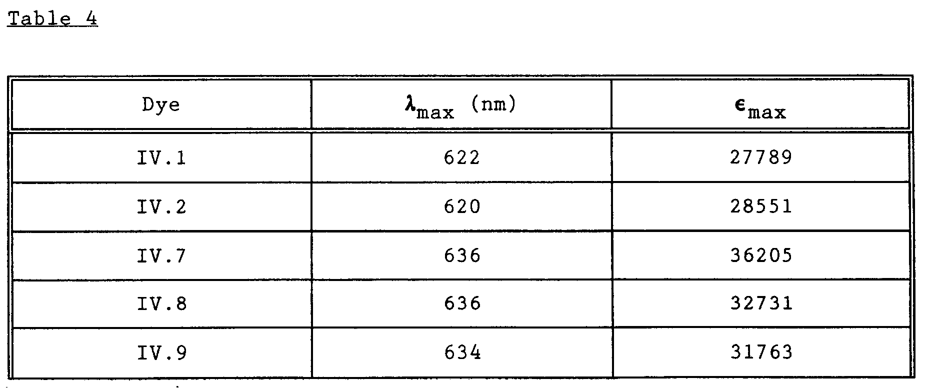

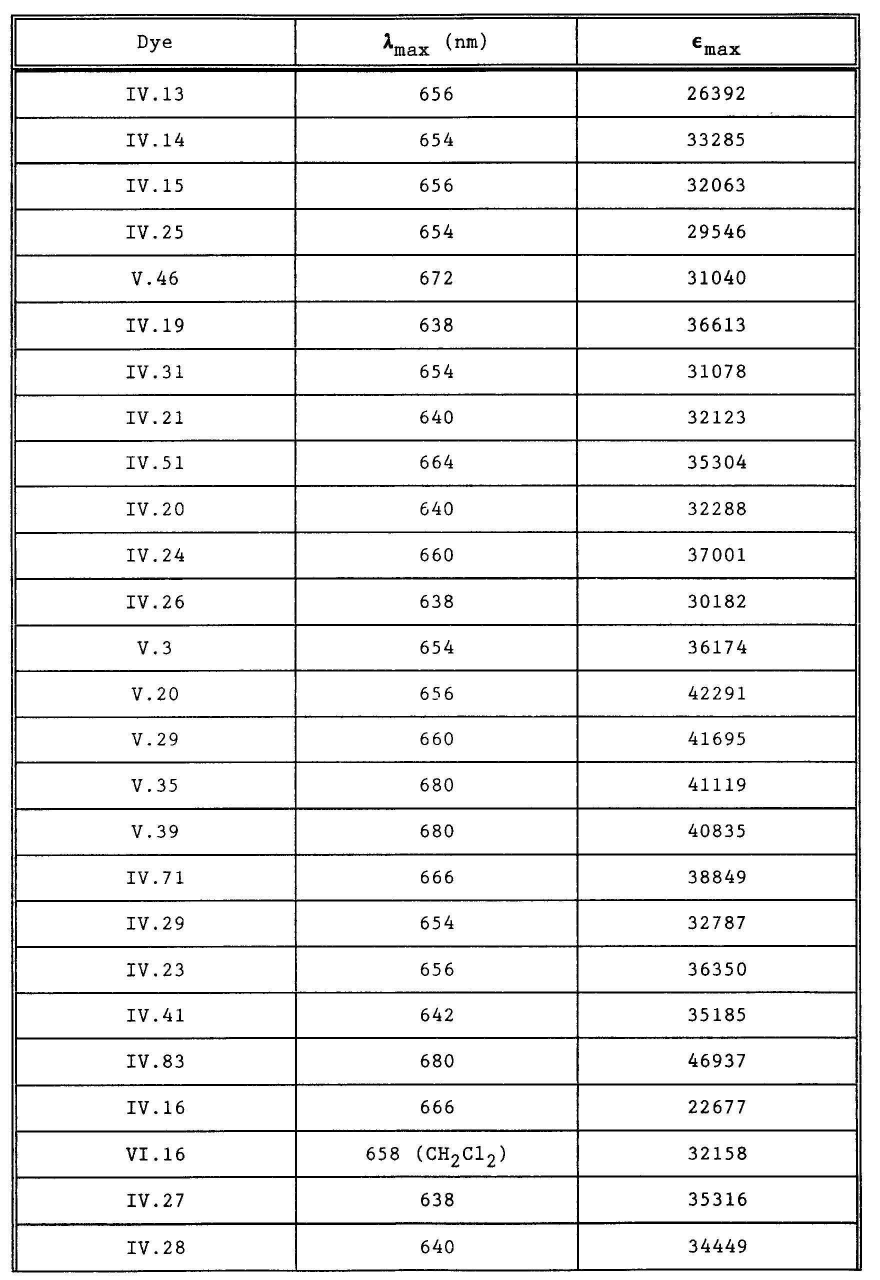

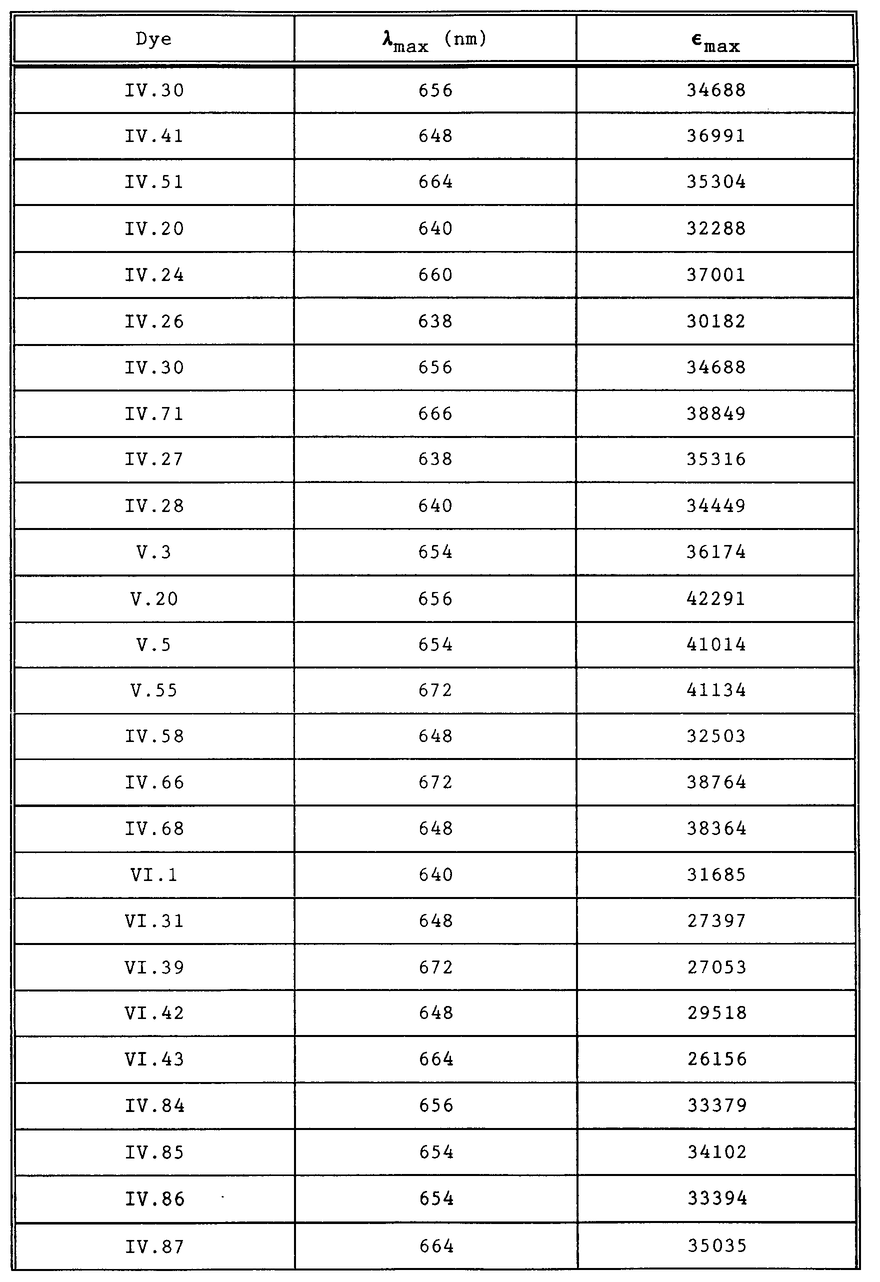

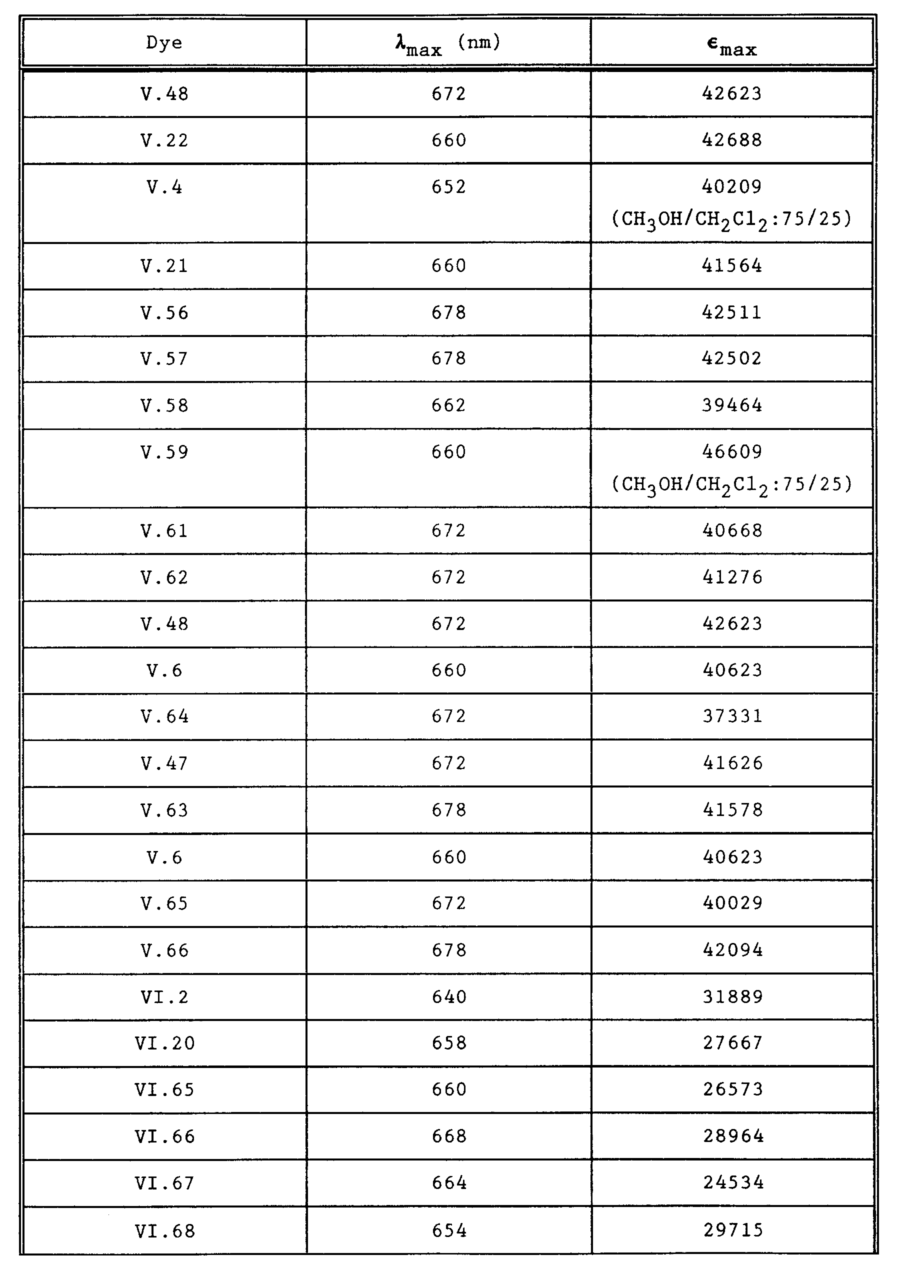

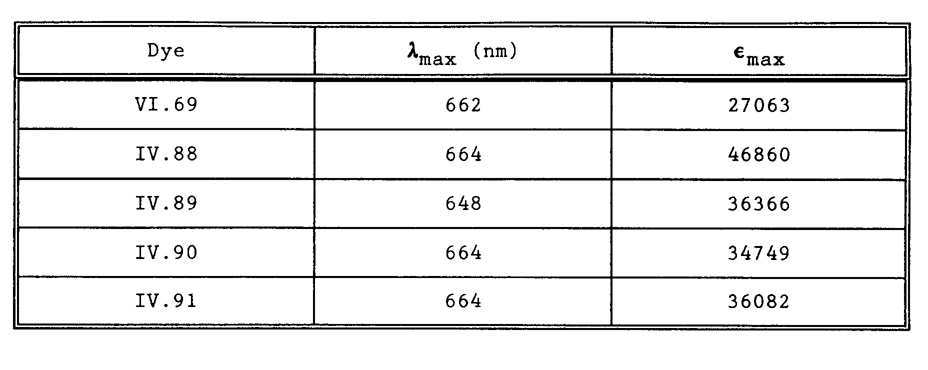

### EXAMPLE 2

Receiver sheets were prepared by coating a subbed polyethylene terephthalate film having a thickness of 175 µm with a dye-image-receiving layer from a solution in ethyl methyl ketone of 3.6 g/m² of poly(vinyl chloride/co-vinyl acetate/co-vinyl alcohol) (Vinylite VAGD™ supplied by Union Carbide), 0.336 g/m² of polyisocyanate (Desmodur VL supplied by Bayer AG), or 0.435 g/m² of Desmodur N75 and 0.2 g/m² of hydroxy-modified polydimethylsiloxane (Tegomer H SI 2111 supplied by Goldschmidt).

Dye-donor elements for use according to thermal dye sublimation transfer were prepared as follows.

A solution in methyl ethyl ketone of 0.5 % by weight of dye and 0.5 % by weight of poly(styrene-co-acrylonitrile) (PSA) (Luran™ 388S, supplied by BASF Germany) as a binder was prepared.

A dye layer having a wet thickness of 100 µm was coated from this solution on a polyethylene terephthalate film support having a thickness of 6 µm and carrying a conventional subbing layer. The resulting dye layer was dried by evaporation of the solvent.

The opposite side of the film support was coated with a subbing layer of a copolyester comprising ethylene glycol, adipic acid, neopentyl glycol, terephthalic acid, isophthalic acid, and glycerol.

The resulting subbing layer was covered with a solution in methyl ethyl ketone of 0.5 g/m² of a polycarbonate having the following structural formula to form a heat-resistant layer : 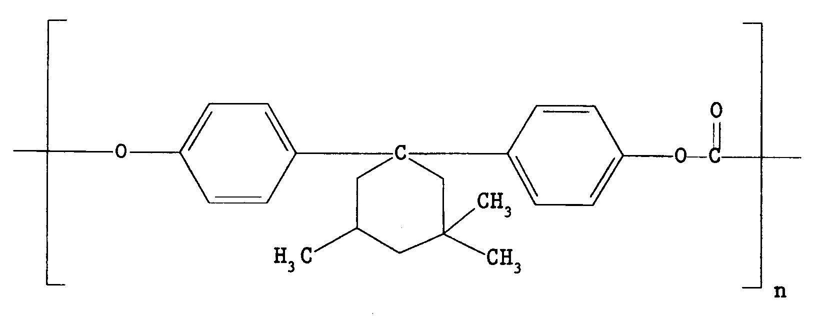
wherein n has a value giving a polycarbonate with a relative viscosity of 1.295 (measured in a 0.5% by weight solution in dichloromethane).

Finally, a top layer of polyether-modified polydimethylsiloxane (Tegoglide™ 410, Goldschmidt) was coated from a solution in isopropanol on the resulting heat-resistant polycarbonate layer.

The dye-donor element was printed in combination with a receiver sheet in a Mitsubishi colour video printer CP100E.

The receiver sheet was separated from the dye-donor element and the colour density value of the recorded image was measured in reflection by means of a Macbeth TR 924 densitometer in the red, green, and blue regions in Status A mode: the Dₘₐₓ-values were measured in transmission.

The above described experiment was repeated for each of the dyes identified in table 5 hereinafter. The results are also given in table 5.

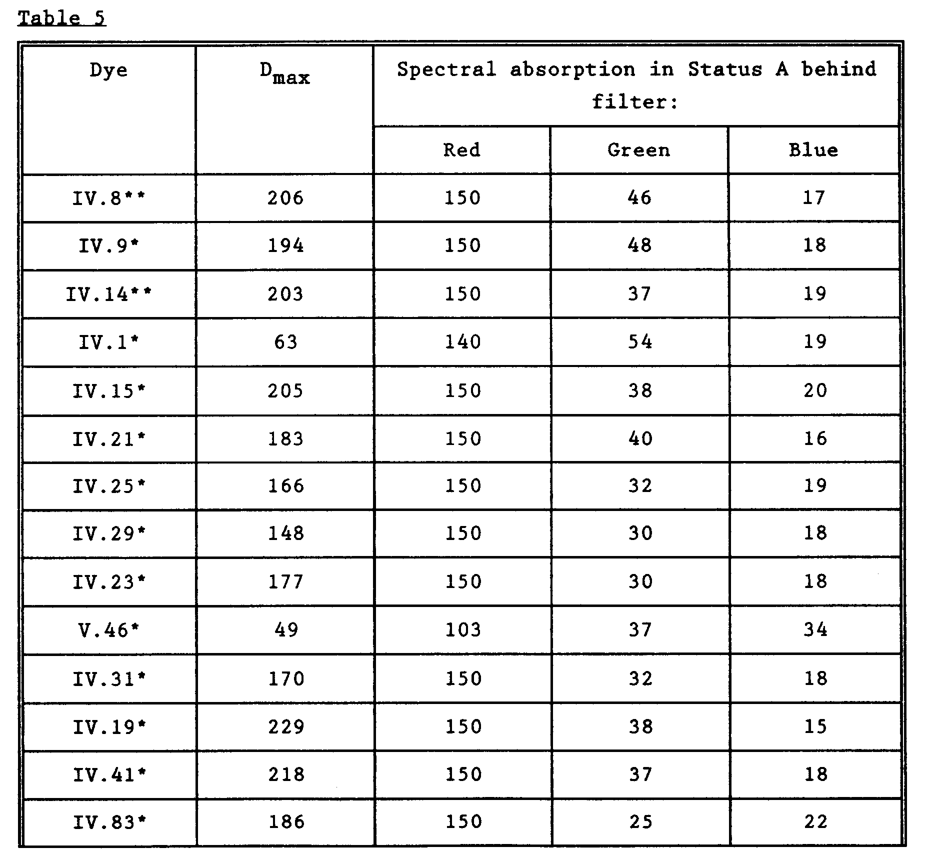

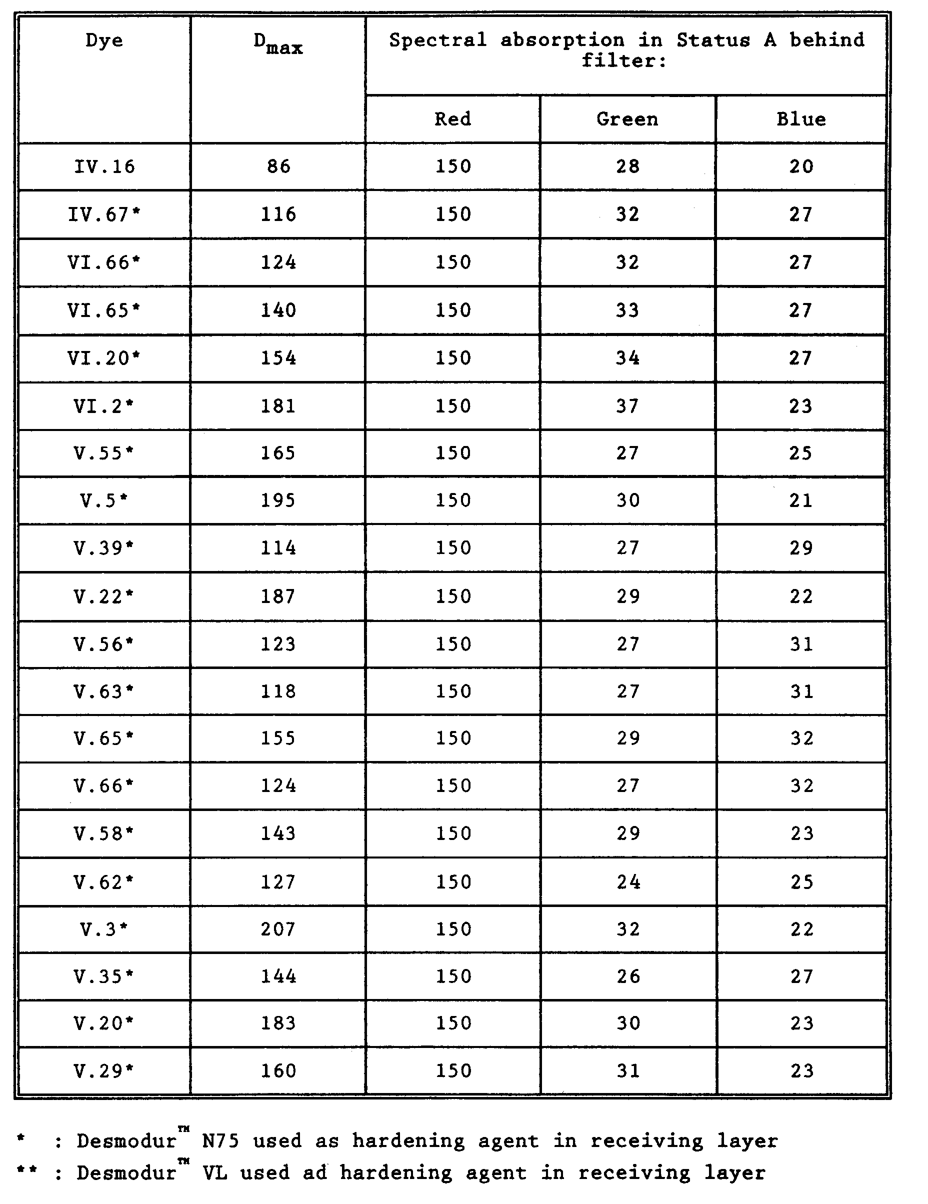

### EXAMPLE 3

Receiver sheets were prepared as described in example 2. Black dye donor elements were prepared as follows: The amounts of dyes as indicated in the following table 6 were added each time to 10ml of a solution of 0.5% by weight of poly(styrene-co-acrylonitrile) (Luran 388S, supplied by BASF Germany) in ethyl methyl ketone. The resulting black coloured dye mixtures were coated, printed, and evaluated as described in the above Example 2, the maximum densities being measured in transmission.

The results of the tests are listed in the following table 6. The prior art dyes C-magenta 1, C-magenta 2, C-cyan, C-yellow 1 and C-yellow 2 having the following structural formulae were used for comparison in the tests. 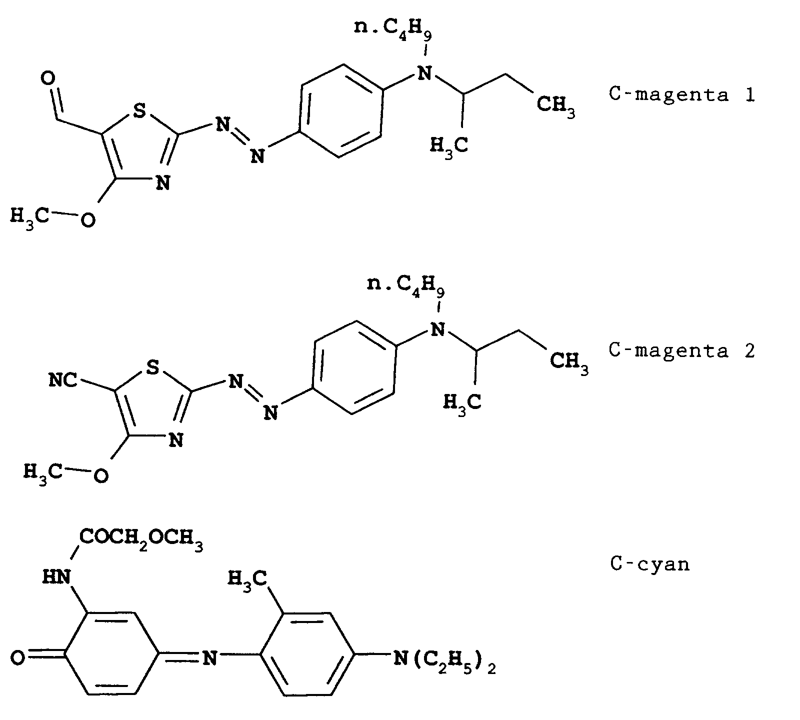 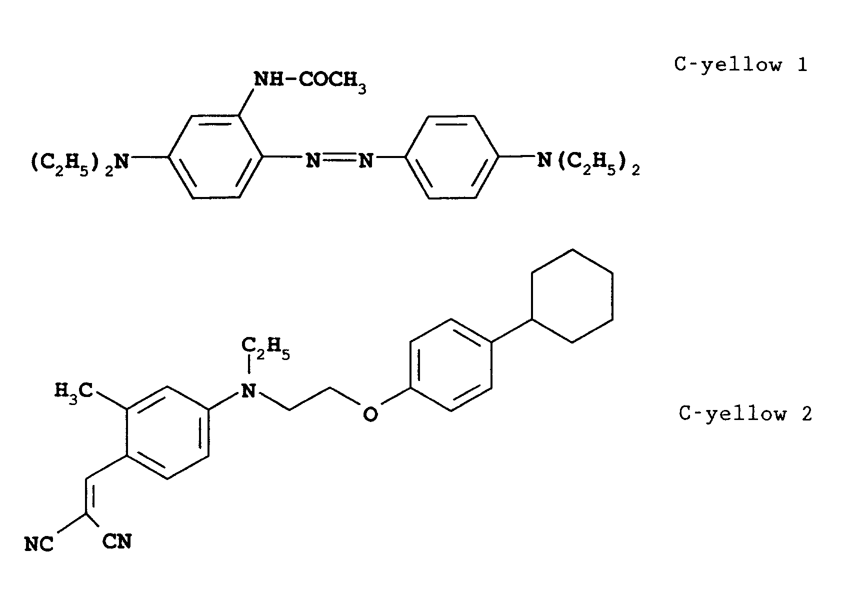
The above dyes can be prepared as described or indicated in EP 578870, US 5,169,828 and the corresponding EP 453,020.

**Table 6**

| Test No. | Dye | Amount of dye in mg | Spectral absorption in Status A behind filter | | | |
|---|---|---|---|---|---|---|
| | | | Red | Green | Blue | Visual |
| 1 | C-cyan | 28 | 225 | 241 | 192 | 232 |
| | C-magenta 1 | 13 | | | | |
| | C-magenta 2 | 31 | comparison | | | |
| | C-yellow 1 | 13 | | | | |
| | C-yellow 2 | 25 | | | | |
| 2 | C-cyan | 23 | 186 | 222 | 217 | 211 |
| | C-magenta 1 | 7 | | | | |
| | C-magenta 2 | 31 | comparison | | | |
| | C-yellow 1 | 18 | | | | |
| | C-yellow 2 | 31 | | | | |
| 3* | C-cyan | 23 | 170 | 208 | 206 | 198 |
| | C-magenta 1 | 7 | | | | |
| | C-magenta 2 | 31 | comparison | | | |
| | C-yellow 1 | 18 | | | | |
| | C-yellow 2 | 31 | | | | |
| 4 | IV.14 | 28 | 247 | 240 | 185 | 237 |
| | C-magenta 1 | 13 | | | | |
| | C-magenta 2 | 31 | invention | | | |
| | C-yellow 1 | 13 | | | | |
| | C-yellow 2 | 25 | | | | |
| 5 | IV.8 | 23 | 208 | 231 | 211 | 222 |
| | C-magenta 1 | 7 | | | | |
| | C-magenta 2 | 31 | invention | | | |
| | C-yellow 1 | 18 | | | | |
| | C-yellow 2 | 31 | | | | |
| 6* | IV.8 | 23 | 214 | 235 | 213 | 225 |
| | C-magenta 1 | 7 | | | | |
| | C-magenta 2 | 31 | invention | | | |
| | C-yellow 1 | 18 | | | | |
| | C-yellow 2 | 31 | | | | |

| | | | | | | |
|---|---|---|---|---|---|---|
| * : Values obtained on receiver sheet hardened with Desmodur N75. | | | | | | |

The results listed in Table 6 show that by means of dye-donor elements incorporating a dye mixture comprising a cyan dye according to the invention transferred dye images with high density black values can be obtained.

## Claims

1. A dye donor element for use according to the thermal dye transfer process, said dye donor element comprising on a support a dye layer comprising a binder and at least one heterocyclic dye according to formula (I): 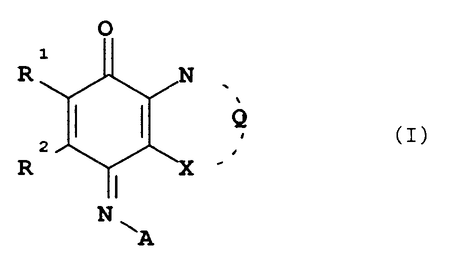 wherein :
Q represents the atoms necessary to form a heterocyclic ring;
A represents an aromatic ring including a hetero-aromatic ring;
X represents O, S or N-G;
G represents hydrogen, an alkyl group, an alkenyl group, an alkynyl group, an aryl group or a heterocyclic ring;
R¹ represents hydrogen, a halogen, an alkyl group, an alkenyl group, an alkynyl group, an alkoxy group, an aryl group, an aryloxy group, a cyan group, an ureido group, an alkoxycarbonylamino group, an alkylthio group, an arylthio group, an alkoxycarbonyl group, a carbamoyl group, a sulfamoyl group, a sulfonyl group, an acyl group, or an amino group;
R² represents hydrogen, a halogen, an alkyl group, an alkenyl group, an alkynyl group, an alkoxy group, an aryl group, an aryloxy group, a cyan group, an acylamino group, a sulfonylamino group, an ureido group, an alkoxycarbonylamino group, an alkylthio group, an arylthio group, an alkoxycarbonyl group, a carbamoyl group, a sulfamoyl group, a sulfonyl group, an acyl group, or an amino group,
or R¹ and R² together with the atoms to which they are attached represent the necessary atoms to form a ring system.

2. A dye donor element according to claim 1 wherein said dye layer consists of a repeating sequence of at least two dye frames, at least one of said dye frames containing a dye according to formula (I).

3. A dye donor element according to claim 1 wherein said dye layer comprises a black mixture of dyes.

4. A dye donor element according to claim 2 wherein said dye layer consists of a repeating sequence of a yellow, a magenta and a cyan coloured dye frame.

5. A dye donor element according to any of the above claims wherein said aromatic ring A corresponds to the following formula (III): 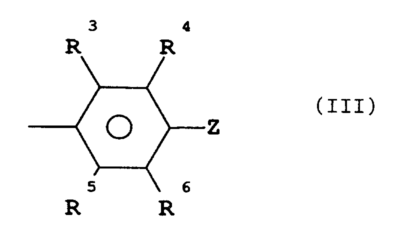 wherein :
Z represents an amino group, an alkoxy group, an alkylthio group or Z and R⁴ and/or Z and R⁶ together with the atoms to which they are attached represent the necessary atoms to form a heterocyclic ring system, and R³, R⁴, R⁵ and R⁶ each independently represent hydrogen, an alkyl group, an alkenyl group, an alkynyl group, an aryl group, a heterocyclic ring, an alkoxy group, an alkylthio group, an aryloxy group, an amino group, an acylamino group, a nitro, a cyano, a halogen, a sulfonylamino group, an ureido, an alkoxycarbonylamino group, an arylthio group, an alkoxycarbonyl group, a carbamoyl group, a sulfamoyl group, a sulfonyl group or an acyl group.

6. A dye donor element according to claim 1 wherein said heterocyclic dye corresponds to one of the following formulas (IV), (V) or (VI) : 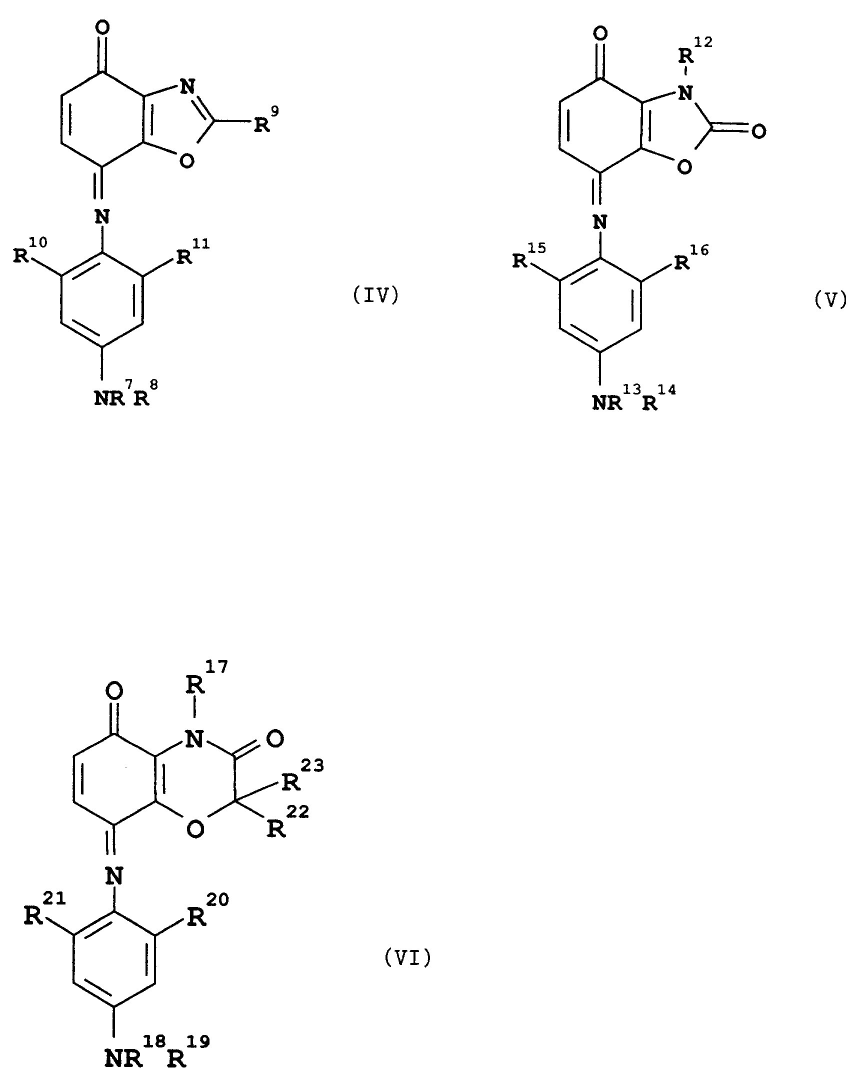 wherein :
R⁹, R¹², R¹⁷ and R²² independently represent hydrogen, an alkyl group, an alkenyl group, an alkynyl group, an aryl group, OH, SH, anilino, an acylamino group, an sulfonamido group, an alkylthio group, an arylthio group, a heterocyclic group, a sulfonyl group, a sulfinyl group, a phosphonyl group, an acyl group, a carbamoyl group, a sulfamoyl group, cyano, an alkoxy group, a sulfonyloxy group, an aryloxy group, a heterocyclyloxy group, a siloxy group, an acyloxy group, a carbamoyloxy group, an amino group, an imido group, an ureido group, a sulfamoylamino group, an alkoxycarbonylamino group, an aryloxycarbonylamino group, an alkoxycarbonyl group, an aryloxycarbonyl group, a heterocyclylthio group, a thioureido group, a nitro group or a sulfonate group or
R²² and R²³ together with the carbon to which they are attached represent a carbonyl or the necessary atoms for completing a ring;
R⁷ and R⁸ each independently represent hydrogen, an alkyl group, an alkenyl group, an alkynyl group, an aryl group or R⁷ and R⁸ together with the nitrogen to which they are attached represent the necessary atoms to form a ring or R⁷ or R⁸ together with the nitrogen to which R⁷ and R⁸ are attached, the carbon atom to which NR⁷R⁸ is attached and a carbon atom of the phenyl ring in ortho position of NR⁷R⁸ represent the necessary atoms to form an annelated heterocyclic ring;
R¹³, R¹⁴, R¹⁸ and R¹⁹ represent one of the meanings defined for R⁷ and R⁸;
R¹⁰, R¹¹, R¹⁵, R¹⁶, R²⁰ and R²¹ represent one of the meanings defined for R¹ and R^{2.}

7. A method for making an image comprising the steps of:
- bringing the dye layer of a dye donor element as defined in any of the above claims in face-to-face relationship with a receiving layer of an image receiving element;
- image-wise heating a thus obtained assemblage thereby forming a transfer image on said receiving element and
- separating said dye donor element from said image receiving element.

8. A dye according to formula (IV), (V) or (VI) defined in claim 6.

9. A cyan leuco dye according to general formula (II): 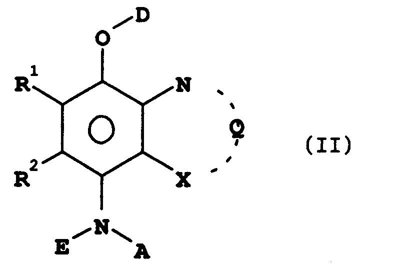 wherein :
R¹, R², A, X and Q have the same meaning as defined in claim 1;
E and D each independently represent hydrogen, an alkyl group, an alkenyl group, an an alkynyl group, an aryl group, an acyl group, cyano,
COOR^{c}, SO₂R^{c}, 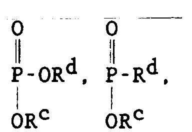 SO₂OR^{c}, COR^{c},
wherein R^{c} and R^{d} each independently represent an alkyl group, an alkenyl group, an alkynyl group, an aryl group or together with the atoms to which they are attached represent the necessary atoms to form a ring.
